(19) Europäisches Patentamt
European Patent Office
Office européen des brevets

(11) EP 3 320 306 B1

(12) # FASCICULE DE BREVET EUROPEEN

(45) Date de publication et mention de la délivrance du brevet:
**11.09.2019 Bulletin 2019/37**

(21) Numéro de dépôt: **16741573.6**

(22) Date de dépôt: **08.07.2016**

(51) Int Cl.:
***G01D 21/00*** *(2006.01)* ***G01L 1/18*** *(2006.01)*
***H01B 1/24*** *(2006.01)* ***B82Y 15/00*** *(2011.01)*
***B82Y 30/00*** *(2011.01)* ***C08J 5/04*** *(2006.01)*
***C08K 5/00*** *(2006.01)* ***C08L 47/00*** *(2006.01)*
***C08L 75/04*** *(2006.01)* ***C08L 83/04*** *(2006.01)*
***G01L 1/22*** *(2006.01)* ***H01B 1/22*** *(2006.01)*

(86) Numéro de dépôt international:
**PCT/EP2016/066348**

(87) Numéro de publication internationale:
**WO 2017/009256 (19.01.2017 Gazette 2017/03)**

(54) **CAPTEUR D'UNE CARACTERISTIQUE PHYSIQUE, COMPORTANT DE PREFERENCE UNE STRUCTURE MULTICOUCHES**

SENSOR FÜR EIN PHYSISCHES MERKMAL, VORZUGSWEISE MIT EINER MEHRSCHICHTSTRUKTUR

SENSOR FOR A PHYSICAL FEATURE, PREFERABLY COMPRISING A MULTILAYER STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2015 FR 1556583**

(43) Date de publication de la demande:
**16.05.2018 Bulletin 2018/20**

(73) Titulaires:
- **CPC Technology**
**14600 Equemauville (FR)**
- **Universite De Bretagne Sud**
**56100 Lorient (FR)**

(72) Inventeurs:
- **BENECH, Gabriel**
**75015 Paris (FR)**
- **LEGRAND, Jean-Marc**
**14600 Equemauville (FR)**
- **FELLER, Jean-François**
**56530 Quéven (FR)**
- **CASTRO, Mickaël**
**56100 Lorient (FR)**
- **TUNG, Tran Than**
**Adelaide,**
**Hawthorn SA 5062 (AU)**

(74) Mandataire: **Nony**
**11 rue Saint-Georges**
**75009 Paris (FR)**

(56) Documents cités:
**DE-T2- 69 131 787** **FR-A1- 2 991 330**
**US-A1- 2012 090 408**

- **MAI FANG ET AL: "Poly(lactic acid)/carbon nanotube nanocomposites with integrated degradation sensing", POLYMER, vol. 54, no. 25, 25 octobre 2013 (2013-10-25), pages 6818-6823, XP028773792, ISSN: 0032-3861, DOI: 10.1016/J.POLYMER.2013.10.035**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 320 306 B1

## Description

La présente invention concerne le domaine des capteurs se présentant notamment sous la forme de patchs destinés à être intégrés dans un dispositif à contrôler. Le dispositif à contrôler peut par exemple être un joint d'étanchéité, un câble par exemple un hauban, un tube par exemple en acier recouvert de polyuréthane ou en acier attaqué, une pièce en matériau composite, par exemple pour l'aéronautique, l'automobile, les hydroliennes ou les éoliennes.

Le capteur peut être destiné à surveiller une caractéristique physique par exemple détecter la présence d'un composé chimique, notamment organique, à partir des interactions physicochimiques avec les molécules, ou une contrainte, une fissuration, la fatigue d'un matériau, ou encore une déformation, telle que le fluage d'un matériau, ou encore une température.

L'invention porte plus particulièrement sur les capteurs comportant une structure composite formée de matériaux conducteurs et de matériaux polymères, de telles structures étant autrement appelées Composites Polymères Conducteurs (CPC). Ces structures ont un fort potentiel en tant que matériaux multifonctionnels de haute performance.

L'invention concerne également les procédés de fabrication de tels capteurs, et leurs utilisations.

On connaît par exemple par le brevet US 7 730 547 un capteur CPC contenant des nanotubes de carbone.

Il existe un besoin pour améliorer ces capteurs, leur fabrication et leurs utilisations possibles dans de multiples domaines où le suivi de certaines caractéristiques physiques peut être utile.

L'invention vise à répondre à tout ou partie de ces besoins et a pour objet, selon un premier de ses aspects, un capteur d'une caractéristique physique, comportant une structure multicouche comportant :

- au moins une couche électriquement conductrice, comportant des nanocharges, lesquelles peuvent être notamment enrobées ou fonctionnalisées, dans une matrice polymère comprenant au moins un polymère, et
- des moyens de connexion électrique,

ladite structure étant thermodurcissable, thermoplastique ou étant un élastomère réticulable et
lorsque la structure est thermodurcissable alors son taux de réticulation est supérieur à 80%, mieux à 90%, voire à 95%,
lorsque la structure est un élastomère réticulable alors elle comprend un taux d'agent réticulant allant de 5% à 20% en moles par rapport au nombre de moles de la structure, et
lorsque la structure est thermoplastique alors elle présente une valeur constante
de la résistivité et de préférence un taux de cristallinité allant de 0% à 60%.

Avantageusement le taux de cristallinité de la structure thermoplastique va de 0% à 60%, de préférence de 0% à 30%. Lorsque le taux de cristallinité de la structure thermoplastique est nul, il s'agit alors d'un matériau amorphe.

De préférence ladite structure comprend au moins une couche isolante, comportant au moins un polymère, ledit polymère pouvant être identique ou différent du polymère de la couche électriquement conductrice. Dans ce cas, la structure est dite multicouche.

Les capteurs selon l'invention présentent des propriétés satisfaisantes voire supérieures aux capteurs de l'art antérieur en termes de rigidité, durée de vie, sensibilité c'est-à-dire en termes de précision des données collectées sur le dispositif à contrôler.

## Définitions

Les définitions et abréviations suivantes sont employées dans le présent texte.

Par « couche isolante », on entend une couche électriquement isolante et/ou protectrice contre les agressions extérieures.

Par « architecture conductrice », on entend l'ensemble des couches électriquement conductrices, cette « architecture conductrice » est également appelée « transducteur ».

Par « préforme », « prépreg » ou « pré imprégné », on entend désigner le précurseur de capteur. Le « précurseur de capteur » est préparé au préalable et sa transformation en « capteur » (cuisson) n'est effectuée qu'au moment de la mise en oeuvre de la structure que l'on souhaite instrumenter.

De préférence, le capteur est sous forme d'un patch.

Par « patch », on entend désigner un système adhésif de petite dimension par rapport à la dimension du dispositif à contrôler en général.

Dans une variante de réalisation, les dimensions du patch peuvent être les suivantes : la longueur va de 1000 $\mu$m à 15 mm, la largeur va de 500 $\mu$m à 10 mm ; l'épaisseur va de 0,1 $\mu$m à 0,001 mm.

Ainsi les dimensions du patch sont longueur/largeur/épaisseur [1000 $\mu$m x 500 $\mu$m x 0,1 $\mu$m] à [15 mm x 10 mm x 0,001 mm].

Le seuil de percolation $\Phi c$ peut être défini comme la quantité minimale de charges conductrices nécessaire pour rendre un polymère composite conducteur électrique selon la loi de percolation définie par l'Eq. 1 :

$$\textbf{Eq. 1} \quad \rho = \rho_0(\emptyset - \emptyset_c)^{-t}$$

Avec ρ la résistivité du polymère composite conducteur électrique, $\rho_0$ la résistivité des charges conductrices, ϕ la fraction volumique des charges conductrices dans le composite polymère, $\phi_c$ la fraction volumique de charges conductrices à la percolation et t l'exposant critique.

L'exposant critique correspond à la pente de la courbe au moment de la percolation.

Le taux de réticulation correspond au taux d'avancement de la réaction chimique permettant la constitution d'un réseau macromoléculaire tridimensionnel. Il se détermine soit par des mesures de gonflement dans un solvant du polymère, soit à partir de la valeur du module élastique au plateau caoutchoutique ou encore par analyse enthalpique différentielle (DSC).

En particulier, le taux de réticulation peut être déterminé à l'aide de l'Eq.2 :

$$\text{Taux de réticulation} = 100\ [1-(\Delta H/\ \Delta H_{ret})]\ ;$$

dans laquelle ΔH est l'enthalpie résiduelle de réaction du polymère ou du mélange de polymères partiellement réticulé(s) (dont on poursuit la réticulation jusqu'à son maximum) et $\Delta H_{ret}$ l'enthalpie de réaction du même polymère ou du mélange de polymères initialement non réticulé et dont on poursuit la réticulation jusqu'à son maximum.

Les mesures de ΔH et de $\Delta H_{ret}$ sont normalisées par rapport à la masse des échantillons afin de permettre leur comparaison même si les quantités diffèrent.

Dans le cas des élastomères réticulables, la nature de l'agent réticulant n'est pas limitative, il relève des compétences de l'homme du métier de sélectionner l'agent réticulant en fonction de l'élastomère utilisé.

Pour les élastomères possédant des doubles liaisons carbone-carbone >C=C<, tel le caoutchouc naturel ou le SBR, la réticulation peut-être faite par un agent réticulant/vulcanisant à base de soufre qui forme des ponts mono-, di- ou polysulfure, notés R-Sx-R' (R et R' représentant des chaînes de l'élastomère ; x peut atteindre environ dix).

Pour les polyuréthanes ils sont le résultat d'une réaction chimique entre des polyols et des diisocyanates (qu'on peut considérer comme réticulant).

Le taux de cristallinité massique se détermine par analyse enthalpique différentielle (DSC) conformément à l'équation ci-dessus. Il correspond à la proportion de polymère se trouvant dans l'état cristallin.

Les abréviations suivantes sont utilisées

| | |
|---|---|
| CNT : | nanotubes de carbone, |
| CNP : | nanoparticules de carbone, |
| GR : | feuillets de graphène, |
| PU : | poly(uréthane) |
| EP : | poly(époxyde), |
| PS : | poly(styrène) |
| aPS | poly(styrene) atactique |
| PMMA : | poly(méthacrylate de méthyle) |
| PC : | poly(carbonate) |
| PET : | poly(éthylène téréphtalate) |
| PLA : | poly(acide lactique), |
| PVA : | poly(acétate de vinyle) |
| GF : | fibres de verre (« *glas fibers* » en langue anglaise) |

**Avantages**

Le fait que les capteurs selon l'invention soient intégrés à un dispositif à contrôler, en particulier sous forme de patchs, conduit à de nombreux avantages.

Tout d'abord, cette forme de patch permet une intrusion limitée dans le dispositif à contrôler, l'intrusion a ainsi un caractère local, est modérée et conduit ainsi à une bonne préservation de l'intégrité dudit dispositif.

L'utilisation sous forme de patchs permet en outre de répartir les capteurs sur l'ensemble du dispositif à contrôler. Une répartition judicieuse des patchs peut permettre d'obtenir à la fois une information locale au niveau de chaque patch, et une information générale en considérant les informations obtenues par l'ensemble des patchs, permettant l'obtention d'une information sur l'état de l'ensemble du dispositif à contrôler.

Ces capteurs de surface ont des fonctionnalités analogues à celles des jauges de déformation métalliques classiquement utilisées, cependant les capteurs selon l'invention présentent l'avantage de permettre d'ajuster la sensibilité facilement par modification de la formulation du capteur ou de sa structuration. Le facteur de jauge (cf. Eq. 2), peut ainsi être augmenté de 2 à 10 fois en changeant la forme ou la taille du capteur pour qu'il puisse intégrer les informations de déformation sur des surfaces plus ou moins grandes. De plus, la gamme de déformation peut elle aussi être ajustée en fonction de la déformation à la rupture du substrat.

$$\text{Eq. 2} \qquad GF = \frac{\Delta R}{\Delta \epsilon}$$

où $\Delta$ est la variation (de R ou $\varepsilon$), R est la résistance et $\varepsilon$ la déformation.

L'invention peut permettre en outre d'apporter une information sur la santé réelle du matériau sur lequel le capteur est déposé.

Le capteur peut comporter une couche de substrat, qui est de préférence la couche isolante, sur laquelle sont déposées les couches électriquement conductrices. Le substrat peut comporter un matériau différent de la structure multicouche.

Avantageusement le substrat est une couche isolante, comportant au moins un polymère, ledit polymère pouvant être identique ou différent du polymère de la couche électriquement conductrice.

En variante, le capteur peut être dépourvu d'une couche de substrat, dans ce cas, il est déposé directement sur le dispositif à contrôler, par exemple au moyen d'un masque, comme décrit plus loin.

Selon une variante avantageuse de l'invention, la structure multicouches peut être pliée en deux. On entend par « pliée en deux » que la structure multicouche a une configuration aplatie et repliée sur elle-même.

**Couche électriquement conductrice**

Les nanocharges peuvent être choisies dans la liste suivante isolément ou combinées entre elles sous forme d'hybrides : nanoparticules, nanotubes, nano feuillets, nano fils, de carbone ou métalliques comme par exemple nanoparticules de carbone, noir de carbone, nanotubes de carbone, graphène, ou encore des fullerènes, des nanoparticules métalliques, nanoparticules d'argent, nanoparticules d'or, nanoparticules de nickel, cette liste n'étant pas limitative.

Les nanocharges peuvent être enrobées notamment au moyen d'un liant tel que le PVA ou l'EP.

Les nanocharges peuvent être greffées par des fonctions alcool, acides, ou amine notamment pour en augmenter la dispersibilité dans les matrices polymère ou diminuer le niveau d'agrégation. Les nanocharges peuvent encore être fonctionnalisées par de plus grandes molécules notamment des oligomères comprenant de 5 à 30 motifs compatibles avec la matrice polymère afin de contrôler l'espace (gap) inter-particulaire aux nano-jonctions électriques du réseau percolé. L'enrobage peut donc apporter une plus grande homogénéité physique et une plus grande sensibilité électrique.

De préférence, les particules sont telles que leur plus grande dimension va de 1 à 1000 nm, mieux de 10 à 100 nm, par exemple de l'ordre de 15 nm.

Les nanotubes ont de préférence une longueur de quelques centaines à quelques milliers de nm, par exemple allant de 100 à -10000 nm.

La présence de ces nanocharges permet d'assurer la conduction électrique dans les couches électriquement conductrices. Afin d'assurer la conduction, les nanocharges doivent être présentes en une quantité supérieure au seuil de percolation de manière à être convenablement interconnectées, mais leur concentration ne doit pas être trop importante sous peine de prévenir toute déconnexion du réseau percolé et ainsi diminuer considérablement la réponse des capteurs.

Par « seuil de percolation », on entend $\phi_c$ la grandeur déterminée par l'Eq. 1 (ci-dessus). La proportion de nanocharges dans la matrice polymère peut être comprise entre 0,1 % et 30 % en volume (v/v), voire entre 0,5% et 5 % v/v, par exemple de l'ordre de 1,5 % v/v.

Le capteur selon l'invention comprend au moins deux couches électriquement conductrices, voire au moins trois couches électriquement conductrices.

Lorsque le capteur comprend au moins deux couches électriquement conductrices, la structure est dite multicouches.

Le nombre de couches électriquement conductrices va de à 100 couches, voire de 2 à 90, mieux de 3 à 80, notamment de 20 à 70, par exemple de 40 à 50.

Les couches électriquement conductrices peuvent avoir chacune une épaisseur allant de 20 à 100 nm, de préférence de 30 à 60 voire de 40 à 50 nm.

Le polymère peut être thermodurcissable, thermoplastique ou un élastomère réticulable. Il est de préférence soluble. Dans un mode de réalisation particulier de l'invention, il est thermodurcissable. Il est de préférence soluble.

La matrice polymère de la couche électriquement conductrice peut comporter au moins un polymère choisi dans la liste suivante, qui n'est pas limitative : un élastomère, par exemple poly(siloxane), poly(uréthane), poly(isoprène),

poly(butadiène).

Avantageusement, la quantité de nanocharges dans chaque couche électriquement conductrice est supérieure au seuil de percolation.

Avantageusement, chaque couche électriquement conductrice présente une conductivité contrôlée, c'est-à-dire une conductivité correspondant à une valeur prédéterminée.

Chaque couche électriquement conductrice présente une résistivité allant de 0,5 kΩ à 5 MΩ.

L'ensemble des couches électriquement conductrices, encore appelé transducteur présente une résistivité allant de 0,5 kΩ à 5 MΩ.

## Moyens de connexion électrique

Les moyens de connexion électrique (électrodes) peuvent être des fils électriquement conducteurs ou des fibres électriquement conductrices ayant une première extrémité en contact avec au moins l'une des couches électriquement conductrices. Une colle conductrice très fortement chargée en particules métalliques comme de l'Ag peut aussi être utilisée pour améliorer les contacts.

Ces fils peuvent avoir une deuxième extrémité qui peut être accessible de l'extérieur du capteur. Ces moyens de connexion électrique peuvent ainsi permettre de transmettre vers l'extérieur du capteur une information sur la caractéristique physique.

Une variante consiste à dessiner/imprimer des pistes conductrices à l'aide d'une encre conductrice, nécessitant une cuisson ou pas, pour réaliser des électrodes permettant de s'affranchir de fils ou fibres décrits ci-dessus.

Une fois extrait du capteur, cette information peut être transmise sous forme de signal jusqu'à un outil d'analyse, puis peut être analysée afin de repérer des anomalies éventuelles et, dans la mesure du possible, donner un maximum d'informations sur le dispositif à contrôler dans lequel peut être intégré le capteur. La transmission peut se faire de plusieurs façons : soit de manière directe, c'est-à-dire *via* une liaison filaire simple, soit, afin d'améliorer la qualité de la transmission filaire, le signal pourra être amplifié et/ou filtré. Cette solution peut notamment être envisagée dans le cas où l'outil d'analyse est éloigné. Une transmission sans fil implique la présence d'un émetteur et d'un récepteur à une distance permettant une transmission suffisamment correcte. Le multiplexage peut permettre de transmettre plusieurs signaux sur un même canal.

En outre une connexion sans fils peut également être mise en place, dans ce cas les capteurs connectés par exemple à une antenne RFID peuvent transmettre les informations à distance et entre eux. L'antenne peut être passive ou active (alimentée électriquement).

L'analyse peut elle aussi être effectuée de plusieurs façons : soit *via* analyse directe du signal analogique, soit après échantillonnage et numérisation du signal.

Les solutions proposées ici peuvent être adaptées au besoin, et il est par exemple possible de combiner plusieurs types de transmission ou de numériser le signal en vue de sa transmission. De plus l'amplification, le filtrage et le multiplexage ne constituent pas une liste exhaustive des moyens d'améliorer la transmission du signal.

## Couche isolante

Le(s) polymère(s) de la couche isolante est/sont également choisi(s) dans la liste suivante, qui n'est pas limitative : un élastomère, par exemple poly(siloxane), poly(uréthane), poly(isoprène), poly(butadiène).

Le polymère peut être thermodurcissable ou thermoplastique. Il est de préférence soluble. Dans un mode de réalisation particulier de l'invention, il est thermodurcissable. Il est de préférence soluble.

Le polymère de la/des couche(s) électriquement conductrice(s) et le polymère de la couche isolante peuvent être identique ou différent. Ils peuvent en outre être compatible(s) ou non.

Par « polymères compatibles » on entend des polymères capables de former un mélange intime au niveau moléculaire lorsqu'on les mélange en quantités massiques égales.

De préférence, le polymère de la couche électriquement conductrice et le polymère de la couche isolante sont compatibles. De manière préférée ils sont identiques.

L'invention a encore pour objet, indépendamment ou en combinaison avec ce qui précède, un procédé de fabrication d'un précurseur de capteur et un procédé de fabrication d'un capteur tel que défini ci-dessus.

Un procédé particulièrement préféré est un procédé qui met en oeuvre au moins une étape de pulvérisation en couche par couche, autrement appelé sLbL (*spray layer by layer* en anglais).

L'invention a notamment pour objet, indépendamment ou en combinaison avec ce qui précède, un procédé de fabrication d'un précurseur de capteur d'une caractéristique physique, comportant une structure multicouche, comportant les étapes suivantes :

a) on prépare une solution par mélange de nanocharges et d'un polymère dans un solvant,

b) on dépose sur une couche polymère isolante une couche de cette solution,
c) on laisse reposer la couche ainsi formée de manière à laisser s'évaporer le solvant et former un film,
d) on mesure la conductivité électrique de la couche électriquement conductrice ainsi formée,
e) tant que la conductivité électrique de la couche électriquement conductrice n'atteint pas une valeur prédéterminée on renouvelle les étapes b) à d),
f) éventuellement on dépose une couche polymère isolante sur les couches électriquement conductrices ainsi formées.

Comme mentionné à l'étape e) on peut renouveler plusieurs fois les étapes b) à d) en fonction du nombre de couches électriquement conductrices souhaité et en fonction de la valeur la conductivité électrique à atteindre.
Généralement les étapes b) à d) sont renouvelées un nombre de fois allant de 1 à 99, voire de 1 à 89, mieux de 2 à 79, notamment de 19 à 69, par exemple de 39 à 49.
Avantageusement l'étape a) est effectuée sous agitation par ultrasons.
Avantageusement au moins une étape b), de préférence toutes les étapes b) est/sont effectuée(s) par pulvérisation, notamment par pulvérisation en couche par couche, autrement appelé sLbL. Selon ce procédé, la solution déposée forme une cette couche liquide constituée par des microgouttelettes de quelques microns à quelques dizaines de microns qui coalescent pour former un film continu.
De préférence la solution déposée forme une couche d'épaisseur allant de 30 à 50 nm, les épaisseurs de deux couches déposées lors de deux étapes b) successives peuvent être identiques ou différentes.
Cette voie permet un contrôle fin de la structure de la couche tant à l'échelle macroscopique que microscopique.
Elle permet également de contrôler la conductivité finale, c'est-à-dire une conductivité correspondant à une valeur prédéterminée.
La valeur de la conductivité finale dépendra de facteurs tels que le taux de déformation, la taille du capteur, l'utilisation visée...
La couche polymère isolante est fabriquée par pulvérisation d'une solution de polymère ou de mélange de polymères. Dans le cas du précurseur, le support peut être un film polymère thermoplastique ou thermodurcissable partiellement réticulé, suffisamment rigide pour pouvoir être manipulé.
On peut laisser reposer à l'étape c) pendant une durée comprise allant de 1 s à 10 min, voire de 20 s à 1 min, par exemple pendant une durée de 30 s.
Selon un autre de ses aspects, la présente invention concerne encore le précurseur de capteur directement obtenu par le procédé ci-dessous.
Ce précurseur de capteur présente avantageusement une ou plusieurs couche(s) électriquement conductrice(s) dont chacune présente une conductivité contrôlée.
Le précurseur de capteur peut ainsi être conservé, en particulier à l'abri de la chaleur et de la lumière, jusqu'au moment de la préparation du capteur.
L'invention a également pour objet, indépendamment ou en combinaison avec ce qui précède, un procédé de fabrication d'un capteur d'une caractéristique physique, comportant une structure multicouche dans lequel on met en oeuvre le procédé de fabrication d'un précurseur de capteur d'une caractéristique physique selon l'invention sur une couche polymère isolante formée en un matériau thermodurcissable, thermoplastique, ou étant un élastomère réticulable comprenant un taux d'agent réticulant allant de 5% à 20% en moles par rapport au nombre de moles de la structure, ledit procédé étant suivi d'une étape de cuisson telle que :

- lorsque la couche polymère isolante est formée en un matériau thermodurcissable, l'étape de cuisson est effectuée jusqu'à l'obtention d'un taux de réticulation de ladite couche supérieur à 80%, mieux à 90%, voire à 95% ;
- lorsque la couche polymère isolante est formée en un élastomère réticulable, l'étape de cuisson est effectuée jusqu'à l'obtention d'une valeur constante de la réticulation ;
- lorsque la matrice polymère isolante est formée en un matériau thermoplastique, l'étape de cuisson est effectuée jusqu'à l'obtention d'une valeur constante de la résistivité ;
- après l'étape de cuisson, le capteur obtenu est refroidi ou laissé refroidir.

Dans le cas d'un matériau thermoplastique, l'étape de cuisson permet une percolation dynamique.
Dans le cas d'un matériau thermoplastique, le refroidissement est effectué de manière à obtenir un taux de cristallinité allant de 0% à 60%, de préférence de 0% à 30%.
Selon un autre de ses aspects, la présente invention concerne encore le capteur directement obtenu par le procédé ci-dessus.

Matériau thermodurcissable

Le traitement du matériau thermodurcissable est de préférence une cuisson du capteur pendant une durée prédéterminée à une température prédéterminée selon un cycle de cuisson prédéterminé.
Le cycle de cuisson peut avoir une durée comprise entre 1 h et 20 h, par exemple comprise entre 4 h et 16 h, étant par exemple de l'ordre de 10 h environ.
Le cycle de cuisson peut consister à chauffer à une température pouvant atteindre une température maximum pendant une durée limitée, la température maximum étant comprise entre 80 et 400 °C, voire entre 100 et 150 °C, étant par exemple de l'ordre de 120 °C.
Le taux de réticulation de la couche électriquement conductrice peut être mesuré, après prélèvement d'un échantillon de la couche électriquement conductrice, par Analyse Calorimétrique différentielle (DSC), par Analyse ThermoMécanique Dynamique (DMTA), par pesées de la masse de solvant sorbée dans le matériau, ou par mesure de la conductivité électrique. De préférence les enthalpies de réaction seront mesurées par DSC afin de calculer les taux de réticulation des (mélanges de) polymères comme défini par l'équation 2 ci-dessus
Lorsque la valeur (prédéterminée) du taux de réticulation est atteinte, on arrête la cuisson.

Matériau thermoplastique

Le traitement du matériau thermoplastique est de préférence une cuisson du précurseur de capteur pendant une durée prédéterminée à une température prédéterminée et un refroidissement à vitesse contrôlée selon un cycle de cuisson prédéterminé.
La résistivité peut être facilement suivie en connectant les électrodes du reliées à la couche conductrice à un multimètre.

Elastomère réticulable

Le traitement du matériau thermoplastique est de préférence une cuisson du précurseur de capteur pendant une durée prédéterminée à une température prédéterminée et un refroidissement à vitesse contrôlée selon un cycle de cuisson prédéterminé.
Le taux de réticulation peut être facilement mesuré par exemple par analyse enthalpique différentielle (DSC).

Joint d'étanchéité

L'invention a encore pour objet, indépendamment ou en combinaison avec ce qui précède, un joint d'étanchéité comportant au moins un capteur d'une caractéristique physique, comportant une structure multicouche comportant :

- au moins deux, notamment au moins trois, couches électriquement conductrices comportant des nanocharges, lesquelles peuvent être notamment enrobées, dans une matrice polymère comprenant au moins un polymère, et
- des moyens de connexion électrique,

la structure multicouche ayant notamment été soumise à un cycle de cuisson contrôlé.
L'invention a notamment pour objet un joint d'étanchéité comportant un précurseur de capteur ou un capteur tel que défini ci-dessus, ou préparé selon le procédé tel que défini ci-dessus, ou comportant au moins un précurseur de capteur préparé selon le procédé tel que défini ci-dessus.
Ce joint peut notamment être avantageusement utilisé dans des installations de centrales nucléaires.
Il existe plusieurs catégories ou types de joints avec différents matériaux, par exemple, acier inoxydable et graphite, graphite comprimé entre deux bagues en acier ; Élastomères pour l'industrie chimique et pétrochimique, acier et thermiculite (vermiculite exfoliée) pour la résistance à hautes températures et aux acides. Fibre-élastomères, PTFE, élastomère, graphite, mica pour l'industrie
Le capteur ou le précurseur de capteur peut être intégré dans le joint d'étanchéité de la manière suivante : au moins un capteur ou précurseur de capteur est inséré à la surface ou sur la tranche du joint. En variante ou additionnellement, au moins un capteur ou précurseur de capteur peut être inséré à l'intérieur du joint.
Par exemple, l'étanchéité d'un assemblage boulonné d'un générateur de vapeur dit GV est obtenue par le positionnement d'un joint spécifique.
Ce joint est réalisé en fonction des critères techniques du dit assemblage et peut être réalisé avec plusieurs types de matériaux, en général en acier inoxydable avec une insertion en graphite pur.
L'intégration d'un capteur selon l'invention dit « intelligent » ou « communiquant » dans un joint d'étanchéité va permettre de prévenir la fuite et aussi permettre une maintenance préventive mieux ciblée d'où une très grande

sécurité et une grande économie.

Selon une première variante, le joint d'étanchéité comprend un capteur d'une caractéristique physique selon la présente invention, comportant une structure multicouche, ladite structure étant thermodurcissable.

Selon une deuxième variante, le joint d'étanchéité comprend un capteur d'une caractéristique physique selon la présente invention, comportant une structure multicouche, ladite structure étant thermoplastique.

Selon une troisième variante, préférée, le joint d'étanchéité comprend un capteur d'une caractéristique physique selon la présente invention, comportant une structure multicouche, ladite structure étant un élastomère réticulable.

Matériau composite

L'invention a encore pour objet, indépendamment ou en combinaison avec ce qui précède, un matériau composite comportant un précurseur de capteur ou un capteur tel que défini ci-dessus ou préparé selon le procédé tel que défini ci-dessus.

Au moins un précurseur de capteur ou un capteur peut être inséré directement en surface de fibres dudit matériau composite, par exemple de fibres de verre ou de carbone du matériau composite. Dans le cas d'un matériau composite en fibres de carbone, l'ajout d'une couche polymère isolante est nécessaire pour isoler le précurseur de capteur ou le capteur de la couche de fibres de carbone.

En variante ou additionnellement, au moins un précurseur de capteur ou un capteur peut être inséré dans une matrice, par exemple polymère, du matériau composite.

Le matériau composite peut comporter au moins un précurseur de capteur ou un capteur inséré dans une matrice, par exemple une matrice polymère du matériau composite.

Une matrice polymère du matériau composite peut comporter un polymère compatible, voire identique, à un polymère de la couche polymère isolante du capteur ou du précurseur de capteur par exemple afin de rendre le capteur non intrusif, c'est-à-dire qu'il ne modifie pas les propriétés mécaniques du composite notamment il n'est pas à l'origine d'amorçage de fissures menant à l'endommagement.

C'est par exemple le cas lorsque la matrice polymère du matériau composite est un poly(époxyde) EP, un poly(ester), un poly(uréthane), une poly(éther cétone), un poly(amide) .

Selon une première variante, le matériau composite comprend un capteur d'une caractéristique physique selon la présente invention, comportant une structure multicouche, ladite structure étant thermodurcissable.

Selon une deuxième variante, le matériau composite comprend un capteur d'une caractéristique physique selon la présente invention, comportant une structure multicouche, ladite structure étant thermoplastique.

Selon une troisième variante, le matériau composite comprend un capteur d'une caractéristique physique selon la présente invention, comportant une structure multicouche, ladite structure étant un élastomère réticulable.

L'invention a encore pour objet, indépendamment ou en combinaison avec ce qui précède, l'utilisation d'un capteur tel que décrit ci-dessus ou préparé selon le procédé tel que défini ci-dessus ou comportant un précurseur de capteur préparé selon le procédé tel que défini ci-dessus dans un câble ou dans la fabrication d'un câble.

L'invention a encore pour objet, indépendamment ou en combinaison avec ce qui précède, l'utilisation d'un capteur tel que décrit ci-dessus ou préparé selon le procédé tel que défini ci-dessus ou comportant un précurseur de capteur préparé selon le procédé tel que défini ci-dessus dans un tube ou dans la fabrication d'un câble.

Ce tube peut notamment être avantageusement utilisé dans des installations de centrales nucléaires.

L'invention a encore pour objet, indépendamment ou en combinaison avec ce qui précède, l'utilisation d'un précurseur de capteur ou d'un capteur tel que décrit ci-dessus dans une structure composite pour des infrastructures de génie civil ou encore l'utilisation d'un précurseur de capteur ou d'un capteur tel que décrit ci-dessus dans la fabrication d'une structure composite pour des infrastructures de génie civil.

L'invention a encore pour objet, indépendamment ou en combinaison avec ce qui précède, l'utilisation d'un précurseur de capteur ou d'un capteur tel que décrit ci-dessus dans un élément de structure dans l'aéronautique ou l'automobile ou d'un précurseur de capteur ou d'un capteur tel que défini ci-dessus dans la fabrication d'un élément de structure dans l'aéronautique ou l'automobile.

L'invention a encore pour objet, indépendamment ou en combinaison avec ce qui précède, l'utilisation d'un capteur tel que décrit ou préparé selon le procédé tel que défini ci-dessus ou comportant un précurseur de capteur préparé selon le procédé tel que défini ci-dessus dans une éolienne, une turbine ou une hydrolienne ou dans la fabrication d'une éolienne, une turbine ou une hydrolienne.

**Description détaillée**

L'invention sera mieux comprise à la lecture de la description détaillée qui va suivre, d'exemples de réalisation de l'invention, et à l'examen du dessin annexé sur lequel :

◦ La figure 1 représente des nano fagots de nanotubes de carbone observés en microscopie électronique à balayage ;
◦ La figure 2 représente la fabrication d'un capteur multicouches à structure hiérarchisée : a) pulvérisation, b) microgouttelettes, c) capteur à l'interface entre le joint et la bride, d) structure multicouche du capteur ;
◦ La figure 3 représente le facteur de jauge du capteur ajusté par le nombre de couches ;
◦ La figure 4 représente le facteur de jauge du capteur ajusté par la teneur en nanocharges ;
◦ La figure 5 représente la réponse d'un capteur CPC déposé sur un tissu en lycra ;
◦ la figure 6 un film de CNT déposé sur une fibre de verre ;
◦ La figure 7 représente la pulvérisation à travers un masque et la connexion du transducteur CPC avec les électrodes 1) film polymère isolant, 2) film sensible CPC, 3) électrodes, 4) film polymère isolant ;
◦ La figure 8 représente un capteur CPC déposé sur une électrode interdigitée souple (8a) et un capteur CPC déposé sur un film de PET (8b) ;
◦ La figure 9 représente la pulvérisation du capteur CPC sur un film d'EP prépreg ;
◦ La figure 10 représente la préparation d'un patch tri-couche par un repliement du film multicouches ;
◦ La figure 11 présente les effets des facteurs environnementaux, température, humidité relative et eau salée sur les performances piézo-résitives du CPC tri-couches ;
◦ La figure 12 la représente percolation dynamique des CNT dans une matrice TPU lors d'isothermes à 172, 180 et 190 °C ;
◦ La figure 13 représente l'évolution de la résistance du réseau conducteur au cours du temps sous l'effet de l'application d'un cycle thermique ;
◦ La figure 14 représente l'évolution de la résistance (module de Young) au cours de la cuisson de la matrice polymère thermodurcissable EP ;
◦ La figure 15 représente la structure d'un joint pris en sandwich entre deux brides ;
◦ La figure 16 représente un joint plat portant un capteur ayant une forme circulaire ;
◦ La figure 17 représente un câble composite CF-EP pour hauban de voilier instrumenté par des capteurs CPC ;
◦ La figure 18 représente les résultats des essais de traction statiques sur les capteurs CPC en surface d'un câble CF-EP, pour une déformation inférieure à 0,4 % ;
◦ La figure 19 représente les réponses des capteurs CPC en mode dynamique ;
◦ La figure 20 représente les enregistrements de 2 capteurs CPC et d'une jauge métallique implémentés en surface d'un câble de hauban lors d'une sortie en mer ;
◦ La figure 21 représente les réponses résistives des capteurs CPC en compression a) TPU-3%CNT et b) EP-2%CNT ;
◦ La figure 22 représente la réponse piézo-résistive des capteurs EP-2%CNT et TPU-3%CNT en fonction de la pression appliquée ;
◦ La figure 23 représente la réponse thermo-résistive des capteurs EP-2%CNT et TPU-3%CNT à des échelons de température ;
◦ La figure 24 représente la réponse chémo-résistive du TPU-3%CNT déposé sur un film de PLA exposé au THF ;
◦ La figure 25 représente la réponse chémo-résistive du TPU-3%CNT déposé sur un film de PLA exposé au CHCl3 ;
◦ La figure 26 représente la réponse chémo-résistive du TPU-3%CNT déposé sur un film de PLA exposé au toluène.

## Capteur

Dans le contexte de l'invention, grâce à l'incorporation de plusieurs couches électriquement conductrices dans une matrice polymère isolante, il est possible d'envisager une combinaison originale de caractéristiques, telles que faible densité, flexibilité, bas coût et propriétés mécaniques, résistance ou non aux composés organiques, conductivité électrique élevées.

Un des avantages des CPC, notamment sous forme de patchs, est leur polyvalence et leur versatilité de fabrication, de dimensionnement et d'usage.

L "incorporation des couches électriquement conductrices dans la matrice polymère isolante a lieu de préférence à une teneur supérieure à un seuil de percolation.

En raison de leur facilité de mise en oeuvre par voie fondu ou solvant, et de la possibilité d'ajuster leurs propriétés par la formulation et le procédé, les capteurs CPC, selon l'invention notamment sous forme de patchs, peuvent viser une large gamme d'applications, en particulier celles nécessitant du matériau stimulable par une variation de grandeur environnementale telle que la température l'atmosphère gazeuse ou liquide, mais aussi la pression ou le champ de contrainte.

Les paramètres d'influence sur la percolation des nanocharges dans les capteurs CPC, le comportement thermo-résistif des CPC, le comportement chémo-résistif des CPC, et le comportement piézo-résistif des CPC sont décrits dans J. F. Feller, M. Castro, B. Kumar, "Polymer CNT conductive nanocomposite for sensing" in Polymer carbon nanotube composites: Préparation, Properties & Applications, Ed. T. Mc Nally, Whoodhead Publishing Ltd, Cambridge,

UK, Chap. 25, pp 760-803, ISBN 1845697618 (2011).

On peut utiliser dans le capteur selon l'invention des nanocharges conductrices multifonctionnelles d'un grand facteur de forme, telles que des nanoparticules, nano fibres, nanotubes ou nano feuillets de carbone ou métalliques (Au, Ag, Ni), ou une combinaison de ces charges. On a illustré sur la figure 1 des nano fagots de nanotubes de carbone observés en microscopie électronique à balayage.

L'invention permet d'obtenir des capteurs CPC très sensibles.

On va maintenant décrire en détails les caractéristiques des capteurs CPC selon l'invention.

**Caractéristiques des capteurs CPC**

Les capteurs composites polymères conducteurs, encore appelés « capteurs CPC » ou plus généralement « CPC » selon l'invention peuvent être utilisés sous différentes formes pour suivre les déformations et la santé des matériaux du fait de leurs propriétés piézo-résistives originales. Les nanotubes de carbone (CNT) peuvent être utilisés pour réaliser des matériaux dits « intelligents » capables de détecter des déformations, des contraintes et des chocs, grâce à la détection des variations de conductivité électrique ou thermique ou de photoluminescence. Des films à base de nanotubes peuvent être utilisés pour contrôler des dispositifs comme par exemple des ailes d'avion.

L'invention a encore pour objet, indépendamment ou en combinaison avec ce qui précède, un matériau composite comportant un capteur tel que défini ci-dessus.

Le capteur peut être intégré dans le matériau composite de la manière suivante : il peut être intégré directement en surface de fibres donc à l'interface des fibres et de la matrice dudit matériau composite, par exemple des fibres de verre ou de carbone du matériau composite, ou dans une matrice polymère par exemple entre deux plis de fibres imprégnées de résine du matériau composite.

*Revêtements de surface*

Les CPC peuvent en variante être utilisés pour former des revêtements de surface capables de permettre le suivi de santé des structures dans le domaine aéronautique grâce à une peinture pulvérisable à base de PU ou d'EP chargée de CNT. La formulation de la peinture peut comprendre de nombreux additifs en plus des CNT. Le capteur selon l'invention permet, dans ces applications, un excellent contrôle de la structure multi-échelles des nanocharges notamment des CNT, en particulier grâce au procédé sLbL, on peut ainsi s'affranchir des additifs, autres que les nanocharges et le(s) polymère(s) dans lesquels ils sont formulés-, qui pourraient interagir avec les nanocharges, la cuisson est parfaitement maitrisée ainsi que son influence sur le facteur de jauge. On peut donc ajuster la sensibilité des capteurs à partir du couple temps/température de cuisson pour une formulation donnée.

*Capteur en surface des matériaux*

L'invention permet également d'obtenir des capteurs à base de CNT pour mesurer différents types de déformations en traction, compression ou torsion, ainsi que pour suivre des déformations plastiques et/ou des endommagements.

L'utilisation de peaux (Skin) de CPC thermoplastiques capables de suivre la déformation de matériaux composites thermoplastiques peut notamment être mise en oeuvre avec un dépôt en sLbL des films fins de CPC chargé de CNT dispersés initialement dans différents polymères amorphes, tels que du poly(styrène) aPS, du poly(méthacrylate de méthyle) PMMA, et du poly(carbonate) PC, sur des tissus de voiles de bateaux en poly(éthylène téréphtalate) PET, sur et des tissus de coton et de poly(uréthane) pour en suivre la déformation. Ce type de capteurs peut également être intégré dans des composites thermoplastiques.

On peut encore fabriquer un capteur par coulée (*cast*) en dispersant des nanoparticules de carbone (CNP, *noir de carbone*) dans une matrice poly(imide), et en contrôlant l'influence de la cuisson sur sa résistance. Ce type de capteur peut être déposé en surface pour suivre la déformation d'une rame/aviron en usage.

*Utilisation de fibres conductrices intégrées à coeur*

On peut en variante réaliser le capteur avec des fibres à partir de CNT coagulés c'est-à-dire enrobés dans un liant PVA pour suivre les déformations et l'endommagement des composites fibres de verre - résine époxy GF-EP. Ces fibres peuvent faire 40 μm de diamètre.

**Matériaux et formulations typiques**

***Matrices thermoplastiques***

Quelques exemples de matrices thermoplastiques utilisables pour l'élaboration des capteurs sont le poly(carbonate), le poly(méthyl méthacrylate) ou le poly(styrène). Le solvant de ces polymères peut être choisi à partir du paramètre d'interaction intermoléculaire lui-même fonction des paramètres de solubilité.

Le choix de ce solvant relève des compétences de l'homme du métier.

Quelques-unes des propriétés de ces polymères sont listées dans le **Tableau 1.**

**Tableau 1: Principales caractéristiques des matrices thermoplastiques utilisée pour la préparation des capteurs CPC.**

| | PC | PMMA | aPS |
|---|---|---|---|
| **Tm(°C)** | amorphe | 160 | 240 |
| **Tg(°C)** | 140 | 109 | 100 |
| **Densité (g.cm$^{-3}$)** | 1,2 | 1,2 | 1,05 |
| **Masse Mol. (g.mol$^{-1}$)** | 32 000 | 180 000 | 50 000 |
| **Com. nom/ Fournisseur** | LEXAN 141 R / GE plastics | VQ101S / ROHM | POLYSCIENCE |
| **Formule** | 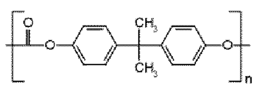 | 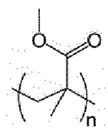 | 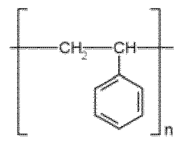 |

***Matrice thermodurcissables***

Une résine poly(époxyde) (EPOLAM 2020©) DiGlycidyl Éther de Bisphénol-A (DGEBA), dont la formule chimique est présentée ci-dessous, fournie par la société Axson peut être réticulée par un durcisseur amine aromatiques tel que le (3-aminomethyl-3,5,5 triméthyl cyclohéxyl amine).

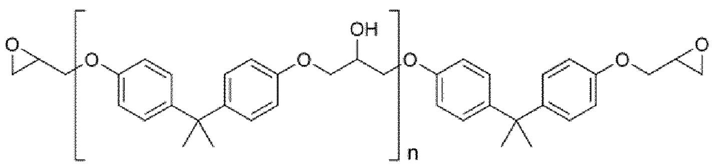

**Structure du pré-polymère époxy non réticulé (0<n<20).**

L'Epolam 2020 a été choisie pour sa faible viscosité et ses bonnes propriétés mécaniques. Certaines d'entre elles sont résumées dans le **Tableau 2.**

**Tableau 2: Propriétés physiques de la résine EPOLAM 2020, de son durcisseur et des mélanges dans les proportions standard.**

| Propriétés physiques | | | | |
|---|---|---|---|---|
| | **Détails** | **Résine** | **Durcisseur** | **Mélange 66 %wt Résine / 34 %wt durcisseur** |
| **Ratio du mélange en poids** | | 100 | 34 | |
| **Ratio du mélange en volume** | | 100 | 41 | |
| **Viscosité à 25°C (mPa.s)** | Brookfield LTV | 1600 | 35 | 500 |

(suite)

| Propriétés physiques | | | | |
|---|---|---|---|---|
| | **Détails** | **Résine** | **Durcisseur** | **Mélange 66 %wt Résine / 34 %wt durcisseur** |
| **Densité à 25°C** | ISO 1675 | 1,17 | 0,95 | 1,10 |
| **Durée de vie en pot à 25°C** | Gel Timer TECAM | | | 135 |

***Nanocharses***

Les nanocharges qui peuvent être utilisées pour une dispersion dans une matrice polymère en vue d'obtenir un film CPC sensibles sont les suivantes : nanocarbones, nanotubes de carbone, feuillets de graphène (GR), nanoparticules de carbone (CNP) (éventuellement issues de suies de moteur thermiques diesel). Les nanoparticules métalliques (Au, Ag, Ni ...) ou de polymère conducteur intrinsèque (PaNi, PEDOT, P3HT...) peuvent aussi convenir. Ces charges peuvent être combinées en elles pour former des hybrides.

Les nanotubes de carbone (CNT) peuvent être simple-, double- ou multi-parois.

**Principe, performances et avantages des capteurs**

***Principe de détection des capteurs CPC***

La présente invention est basée sur le phénomène suivant : toute modification de structure de l'architecture conductrice des capteurs comprenant des nanocharges conductrices électriques conduit à une variation de la distance inter-particulaire aux nano-jonctions électriques, ce qui se traduit par une variation exponentielle de la résistance des capteurs, dont la composante ohmique se convertit progressivement en composante tunnel quantique selon la formule de l'équation ci-dessous :

$$R_{tunnel} = \frac{V}{AJ} = \frac{h^2 d}{Ae^2\sqrt{2m\lambda}} \exp\left(\frac{4\pi d}{h}\sqrt{2m\lambda}\right)$$

Ainsi on peut également considérer ces capteurs comme des senseurs résistifs quantiques (QRS).

***Performances des capteurs CPC***

Les capteurs selon l'invention peuvent répondre à tous types de sollicitation mécaniques, thermiques ou chimiques susceptibles de faire varier la distance moyenne inter-particulaire dans leur réseau percolé. Ainsi ils sont capables de fournir des réponses piézo-résistives de type réponse statique, réponse dynamique, réponse à un choc, réponse à une fatigue) pour différentes sollicitations mécaniques.

***Avantages des capteurs CPC***

Comme déjà mentionné, un de leurs avantages est leur polyvalence et leur versatilité. Les capteurs CPC selon l'invention peuvent être appliqués en surfaces, à coeur dans la matrice ou à l'interface entre les fibres de renfort et la matrice d'un matériau composite. Ils peuvent donner des informations sur la déformation élastique, plastique et jusqu'à la rupture du composite. Les capteurs CPC peuvent suivre l'évolution de l'endommagement et de la santé d'un composite aux différents endroits pertinents qui peuvent être prédits par la modélisation des efforts dans les pièces en fonction du cahier des charges. Ils n'ont pas de limitations de géométrie, *i.e.,* longueur ou épaisseur, ni implantation.

De préférence, le transducteur, *i. e.* l'ensemble des couches électriques, présente une taille qui peut aller de quelques $mm^2$ à quelques $cm^2$ sur 1$\mu$m d'épaisseur.

Les capteurs CPC sont compatibles avec la plupart des procédés de fabrication des composites manuels ou robotisés, par enduction, infusion, compression, cette liste n'étant pas limitative.

## Procédés de fabrication

L'invention a encore pour objet, indépendamment ou en combinaison avec ce qui précède, un procédé de fabrication d'un capteur tel que défini ci-dessus.

### *Voie «état fondu »*

Les capteurs selon l'invention peuvent être élaborés par voie « état fondu » au moyen d'un dispositif comme une extrudeuse ou un mélangeur interne qui plastifie la phase polymère par la combinaison du cisaillement et de la température, tout en permettant la dispersion des nanocharges dans la matrice polymère.

### *Voie « solvant »*

Les capteurs selon l'invention peuvent être élaborés par voie « solvant »

La voie « solvant » présente l'intérêt de permettre un bon contrôle du niveau de dispersion des nanocharges et ainsi des performances des capteurs. Le procédé de dépôt associé à la voie solvant est souvent le trempage, le goutte par goutte, la coulée (cast) ou plus rarement le « spray » ou pulvérisation.

La voie solvant présente l'avantage de comporter plusieurs paramètres ajustables, tels que la concentration de polymère et de nanocharges dans la solution, la nature du solvant, le temps, la puissance et la température de sonification. Une étape de sonification (ex : 2 à 6 h à 60 °C dans le chloroforme à l'aide d'un appareil Branson 3510 de 100 W à 40 kHz par exemple) est utile pour assurer une bonne dispersion des nanocharges et des macromolécules en solution.

Le choix des constituants de la formulation du capteur CPC à pulvériser se fait en fonction du type de matrice polymère et de l'architecture conductrice utilisées pour la fabrication du composite (capacité de mesure non intrusive dans le cas où le polymère utilisé pour le capteur CPC est le même que celui de la matrice du composite) et de la nature des grandeurs que l'on souhaite suivre dans le matériau (déformation élastique, déformation plastique, rupture, compression, traction, cisaillement, choc). Dans ce dernier cas ce sont les caractéristiques mécaniques et viscoélastiques du polymère (module, taux de réticulation, seuil de plasticité, résistance à la rupture) et celles de la nanocharge (conductivité électrique, facteur de forme, teneur) qui vont conditionner les performances du capteur CPC.

Par exemple pour réaliser des capteurs intégrables dans des composites structuraux à fibre de carbone ou de verre et matrice poly(époxy) pour en suivre la santé, on privilégiera une formulation à base de poly(époxy) et de nanotubes de carbone (EP-CNT). Dans ce cas on peut par exemple disperser de 4 à 8 $g.dm^{-3}$ d'un mélange contenant 98 % en masse d'EP et 2 % de CNT dans du chloroforme en vue de la pulvérisation ultérieure.

### *Structure hiérarchisée par « spray » ou pulvérisation en couche par couche*

Comme déjà mentionné, un procédé particulièrement intéressant pour préparer les capteurs, ainsi que les précurseurs de capteurs, selon l'invention est un procédé mettant en oeuvre une étape de pulvérisation en couche par couche (sLbL).

Un avantage des capteurs obtenus par ce procédé réside dans le contrôle possible des structures aux différentes échelles, qui permet d'assurer des propriétés reproductibles et durables. De ce point de vu les structures multi-échelles hiérarchisées illustrées à la figure 2, obtenues par le procédé de pulvérisation en couche par couche (sLbL) qui sera décrit plus loin, offrent une garantie supérieure en terme de contrôle de l'architecture conductrice et in fine de performances. On a illustré à la figure 2 la fabrication d'un capteur multicouches à structure hiérarchisée : a) pulvérisation, b) microgouttelettes, c) capteur à l'interface entre les fibres et la matrice, d) structure multicouches du capteur.

La pulvérisation en couche par couche (sLbL) de la ou des couches électriquement conductrice(s) permet d'assurer une structuration hiérarchisée (en 3D) de l'échelle nanométrique jusqu'à l'échelle millimétrique. Dans un système monolithique tel qu'un film épais obtenu en une seule étape, il est difficile de contrôler l'organisation des nanocharges qui peuvent s'agréger de manière non contrôlée au moment de la solidification du film. En effectuant une structuration par étapes, on peut figer la structure conductrice et l'ajuster au fur et à mesure de sa construction en 3D. Ce procédé permet la réalisation de 1 à 100 couches, voire de 2 à 90, mieux de 3 à 80, notamment de 20 à 70, par exemple de 40 à 50.

L'ensemble des couches présente une épaisseur allant de 20 à 2000 nm.

Ceci représente une amélioration du procédé par voie solvant dans la mesure où l'on peut construire le capteur de manière additive et utiliser l'épaisseur comme paramètre ajustable supplémentaire pour l'optimisation de la fabrication du capteur comme on peut le voir sur la figure 3, sur laquelle on a représenté la variation de résistance $\Delta R/R_0$ en % et la résistance initiale $R_0$ en Ohms, en fonction du nombre de couches.

Typiquement on utilise des conditions de spray analogues à celles utilisées pour la fabrication des capteurs

de composés organiques volatiles (COV) précédemment développés dans les articles M. Castro, J. Lu, S. Bruzaud, B. Kumar, J. F. Feller. Carbon nanotubes/poly(e-caprolactone) composite vapour sensors, Carbon, 47, 1930-1942 (2009*)* et J. F. Feller, J. Lu, K. Zhang, B. Kumar, M. Castro, N. Gatt, H. J. Choi. Novel architecture of carbon nanotube decorated poly(methyl methacrylate) microbead vapour sensors assembled by spray layer by layer, J. Mater. Chem. 21, 4142(2011*).*

La pulvérisation est réalisée en utilisant un dispositif développé au laboratoire permettant l'ajustement du débit d'écoulement de la solution de CPC dans la buse (index de 1 à 5) conditionnée par de pression d'air comprimé appliquée (ex : 0,01 < $p_s$ = 0.60 MPa), de la distance entre la buse et la cible (5 < $d_{bc}$ < 20 cm) et de la vitesse de balayage de la surface ($V_s$ = 10 $cm.s^{-1}$). La pulvérisation s'effectue à température ambiante (20-25 °C). La conductivité des échantillons est suivie après chaque dépôt de couche pendant le processus de dépôt pour s'assurer que la résistance du film évolue bien comme attendu en fonction du nombre de couches (figure 3). Après le dépôt par pulvérisation, les échantillons sont séchés à température ambiante pendant 24 heures sous vide.

On peut mesurer l'épaisseur moyenne des capteurs mesurée par AFM et SEM en fonction du nombre de couches pulvérisées.

On a illustré aux figures 3 et 4 le facteur de jauge Ar en % du capteur (sensibilité) ajusté respectivement par le nombre de couches (figure 3) et la teneur en nanocharges (figure 4).

D'autre part le sLbL est une technique très versatile qui permet d'effectuer des dépôts sur n'importe quel type de surface pourvu qu'elle ait une énergie de surface compatible avec les constituants de la solution à pulvériser. A la figure 5 cette technique a été mise en oeuvre sur un textile et à la figure 6 sur une fibre non conductrice, à savoir une fibre de verre.

On a illustré à la figure 5 la réponse d'un capteur CPC déposé sur un tissu en lycra, en illustrant la résistance relative (%) en fonction du temps (s), et à la figure 6 un film de CNT déposé sur une fibre de verre.

Le film sensible créé par spray peut ainsi être formé sur une voile composite de bateau pour en suivre les déformations, comme explicité dans l'article C. Robert, J. F. Feller, M. Castro, Sensing skin for strain monitoring made of PC-CNT conductive polymer nanocomposite sprayed layer by layer, ACS Applied Materials & Interfaces, 2012, 4, 7, 3508-3516 ou encore à l'interface des plis de renfort et de la résine dans les composites comme explicité dans l'article I. Pillin, M. Castro, S. Nag Chowdhury, J. F. Feller, Robustness of carbon nanotube sensing interphase to probe composites' interfacial damage in-situ, Journal of Composite Materials, doi: 10.1177/0021998315571029, (2015*).*

Dans tous les cas la pulvérisation s'effectue à travers un masque dont les dimensions peuvent être ajustées en fonction des sollicitations attendues et du substrat 1 considéré, sur au moins deux électrodes (cf. figure 7) qui peuvent être des fils ou fibres conducteurs en carbone ou en métal (Cu, Ni, Ag, Au ...) dont le contact avec le film CPC transducteur 2 d'un part et les câbles des appareils d'acquisition d'autre part, peut être amélioré par l'utilisation d'une colle conductrice 3 (ex : base d'époxy fortement chargée de particules d'argent). Selon le cas on peut aussi utiliser des électrodes interdigitées déposées directement sur la surface par impression (microplotter Digidrop) ou par transfert d'une encre conductrice à base de particules métalliques ou carbonées. Une couche protectrice 4 peut encore être ajoutée.

On a illustré à la figure 7 la pulvérisation à travers un masque et la connexion du transducteur CPC avec les électrodes.

***Capteur patch par dépôt sLbL sur film flexible***

Pour faciliter la production, il peut être intéressant de fabriquer les capteurs CPC séparément et non pas *in-situ* pendant la fabrication du matériau auquel il doit être associé pour en suivre la cuisson, la santé ou simplement la déformation.

Dans ce cas on parle de « précurseur de capteur ».

Le substrat peut être une électrode interdigitée ou un film de PET ou de PLA transparent et dans ce cas on peut prévoir que le dépôt de CPC le soit aussi. On a illustré à la figure 8 un capteur CPC déposé sur une électrode interdigitée souple (8a) et un capteur CPC déposé sur un film de PET (8b).

Le substrat peut être un film de résine pré-réticulée (prépreg) qui après pulvérisation de la couche électriquement conductrice de CPC va être associé en surface ou dans un composite structural et cuit avec lui. On a illustré à la figure 9 la pulvérisation du capteur CPC sur un film d'EP prépreg.

***Sandwich tri-couches robuste***

Avantageusement, par un repliement du film on pourra alors produire un patch tri-couche isolé et robuste, comme illustré sur la figure 10.

Selon un autre de ses aspects, l'invention vise encore un capteur dans lequel la structure multicouches est pliée en deux.

Les capteurs CPC étant conducteurs et sensibles il convient de les isoler et/ou de les protéger *vis à vis* des agressions extérieures. Le procédé de fabrication tri-couches illustré à la figure 10 permet d'atteindre ces deux objectifs.

*Isolation électrique*

Lorsque le CPC est associé à un composite renforcé par des fibres de carbone (CF) qui sont elles aussi très conductrices électriques il faut les isoler du CPC sous peine que celui-ci soit en court-circuit. Le patch tri-couche de la figure 10 permet de localiser l'architecture électriquement conductrice 5 (le transducteur) fabriquée par sLbL en sandwich entre deux couches de polymère isolant électrique 6 et de prévenir tout court-circuit avec les CF du composite.

*Résistance aux agressions environnementales*

Afin de limiter l'effet des facteurs environnementaux sur les performances piézo-résistive du CPC, nous avons testé l'influence de la température, de l'humidité et de l'eau sur la réponse piézo-résistive des CPC tri-couches protégés. On a illustré sur la figure 11 les effets des facteurs environnementaux, température, humidité relative, et eau salée sur les performances piézo-résitives du CPC tri-couches.

On a illustré sur la figure 11 a) l'effet de l'humidité sur la sensibilité du CPC à différentes températures :-40°C, 20 et 60 °C pendant 5 heures. L'humidité relative n'a pas d'effet sur le comportement de détection. Concernant l'effet de la température, on a illustré sur la figure 11 b) qu'une plus grande sensibilité (facteur de jauge G plus élevé) est obtenue à - 40°C mais contrebalancée par une plus faible stabilité, tandis qu'entre 20 et 60 °C les CPC testés présentent une sensibilité et une stabilité inchangés. La figure 11 c) montre aussi qu'un CPC tri-couches est toujours fonctionnel vis à vis de la détection de déformation après 3 mois de vieillissement dans l'eau salée et ne présente aucun changement de nature de ses signaux électriques, contrairement à des capteurs non protégés qui sont rapidement hors service après quelques instants d'immersion. Nous avons aussi étudié l'influence de gouttes d'eau salée projetées sur un CPC tri-couches protégé, sur son comportement piézo-résistif lors d'un essai de traction. Les résultats de la figure 11 d) montrent que cette perturbation sensée simuler un fonctionnement en mer, n'a aucun effet sur les signaux de détection du CPC tri-couches protégé, démontrant ainsi son bon niveau de protection vis à vis d'un environnement humide salin entre 0 et 60 °C. On a illustré sur cette figure 11 d) la variation de résistance $\Delta R/R_0$ en % en fonction du temps t.

***Cuisson du précurseur de capteur CPC***

La cuisson des précurseurs de capteurs CPC permet d'ajuster leur conductivité par percolation dynamique, celui fournit un paramètre ajustable supplémentaire mais aussi permet de garantir la stabilité du capteur dans le temps, car si celui-ci est trop loin de son équilibre thermodynamique ses propriétés vont dériver dans le temps.

*Cuisson des CPC à matrice thermoplastique*

Ce traitement a pour effet si la matrice polymère est thermoplastique de la fluidifier et de favoriser l'interconnexion des nanoparticules qui y sont dispersées par percolation dynamique. Ce traitement permet d'augmenter la résistivité du capteur jusqu'à une valeur « seuil » ou la résistivité reste constante. Lorsque cette valeur de résistivité est atteinte, l'étape de cuisson est arrêtée.

On a illustré sur la figure. 12 la percolation dynamique des CNT dans une matrice TPU lors d'isothermes à 172, 180 et 190 °C. On a représenté la conductivité $\sigma$ en fonction du temps t.

*Cuisson des CPC à matrice thermodurcissable*

Pour les capteurs à matrice thermodurcissable, l'effet de la cuisson est de faire varier le taux de réticulation qui provoque une agrégation des nanoparticules conductrices et ainsi diminue la résistance du réseau conducteur, comme on le voit sur la figure 13. On a illustré la température T et les résistances R1 et R2 de deux capteurs différents, en fonction du temps t.

On a illustré à la figure 14 l'évolution de la résistance (module de Young E) au cours de la cuisson de la matrice polymère thermodurcissable EP (%).

Les conditions de cuisson de la résine EP permettent de contrôler les propriétés mécaniques (figure 14) et électriques des capteurs CPC.

**Joint d'étanchéité**

L'invention a encore pour objet, indépendamment ou en combinaison avec ce qui précède, un joint d'étanchéité comportant un capteur tel que défini ci-dessus.

Un joint d'étanchéité est constitué d'un matériau déformable destiné à être serré entre des éléments d'assemblage (ex : brides, tubes ...) pour empêcher la fuite du fluide contenu dans lesdits éléments d'assemblage.

Les joints d'étanchéité sont présents dans tous les dispositifs dans lesquels un fluide est mis en circulation.

Pour assurer son bon fonctionnement, un joint d'étanchéité est soumis à une force de serrage qui ne doit pas dépasser une pression maximale causant le fluage inacceptable du matériau du joint sous serrage, mais suffisante pour maintenir la pression minimale nécessaire à l'assemblage du joint pour atteindre le niveau désiré d'étanchéité dans les conditions de fonctionnement.

Or il demeure un besoin de suivi de l'état de santé du matériau, en particulier il demeure un besoin de connaitre le degré de sollicitation mécanique du joint, ce qui permettrait de détecter d'éventuelles fuites du fluide contenu dans lesdits éléments d'assemblage. Il est également possible de suivre l'endommagement des joints sous l'effet d'un vieillissement physique et/chimique ou sous irradiation.

Cependant, lors du fonctionnement du dispositif dans lequel ledit joint est placé, il est très difficile d'avoir accès au joint, en conséquence il n'existe à ce jour pas de dispositif, méthode permettant d'obtenir une information fiable lors du fonctionnement du dispositif dans lesquels un fluide est mis en circulation.

Malgré les difficultés dues à la position, aux conditions de fonctionnement des dispositifs concernés, les inventeurs ont montré, de manière surprenante et avantageuse, que le capteur selon l'invention peut être utilisé pour obtenir les informations requises au niveau d'un joint sans modifier le fonctionnement du dispositif à contrôler.

Ainsi le capteur selon l'invention peut être placé à divers endroits sur le joint notamment en surface ou à coeur, il peut ainsi être judicieusement placé en fonction de la géométrie du joint aux endroits où il la collecte de l'information est la plus pertinente.

Une fois le joint en place, le capteur permet l'obtention en continu d'informations notamment sur l'état mécanique du joint. En plaçant un capteur sur la face externe du joint c'est-à-dire à l'extérieur de l'élément d'assemblage, des informations concernant une éventuelle fuite du fluide pourra être obtenue.

En outre les informations obtenues pourront être de nature qualitative ou quantitative.

L'utilisation sous forme de patchs permet en outre de répartir les capteurs sur l'ensemble du dispositif à contrôler. Une répartition judicieuse des patchs peut permettre d'obtenir à la fois une information locale, au niveau de chaque patch, et une information générale, en considérant les informations obtenues par l'ensemble des patchs, permettant l'obtention d'une information sur l'état de l'ensemble du dispositif à contrôler.

Le joint d'étanchéité peut être choisi dans la liste suivante, qui n'est pas limitative : joint en élastomère, joint en matériau composite fibres-élastomère, joint en graphite, joint en PTFE, joint en PTFE modifié, joint métalloplastique, joint spiralé, joint métalloplastique, joint strié, joint torique.

Dans le cas d'un joint d'étanchéité, l'adjonction ou l'intégration d'un capteur CPC peut renseigner sur le niveau de sollicitation mécanique du joint, sur la compromission de son intégrité par des agents chimiques ou encore sur une dégradation éventuelle pouvant provoquer une fuite.

Le joint peut comporter au moins un capteur ou un précurseur de capteur configuré pour détecter une fuite d'un composé chimique, le composé chimique étant par exemple choisi dans la liste suivante, qui n'est pas limitative : $H_2O$, $H_2$, $O_2$, $CO_2$, $CH_2O$, $CHCl_3$, $C_6H_6$, $CH_3OH$, $CH_3CH_2OH$, et autres composés organiques volatiles ou liquides comme des solvant chlorés, des alcools, des cétones, des aldéhydes...

Le capteur peut être configuré de telle sorte que la détection soit possible dès qu'une très faible quantité de l'ordre de quelques parties par million (ppm) du composé chimique est présente.

Les capteurs CPC sont d'une mise en oeuvre aisé, de part leur adaptabilité. Ils peuvent être intégrés dans un joint de différentes manières, par exemple par voie fondu ou en solution. Dans ce dernier cas, ils peuvent être structurés en multicouches nanométriques et intégrés dans ou sur des supports variés.

## Suivi de santé de joints (fuites, pression, température)

Des films à base de nanotubes sont notamment utilisés pour contrôler des dispositifs comme par exemple des joints en surface ou à coeur.

Pour cela il est possible de déployer un réseau de capteurs selon l'invention à base de nano composites polymères conducteurs (CPC) chargés de CNT et/ou de feuillets de graphènes GR dispersés dans une matrice polymères ou élastomère (par exemple : EP, TPU), en surface ou dans le joint pour remplir une double fonction: (1) le suivi de la force de serrage du joint en deçà de laquelle l'étanchéité ne serra plus assurée; (2) détecter une fuite vient peut-être de la diffusion fluide sous condition de fonctionnement.

Le capteur peut être disposé en surface du joint. On a illustré sur la figure 15 la structure d'un joint 8 destiné à être pris en sandwich entre deux brides et la disposition possible du capteur CPC 10 à sa surface.

On a illustré à la figure 16 un joint plat 12 portant un capteur 14 ayant une forme circulaire. Il peut s'agir d'un capteur unique ou d'un ensemble de capteurs disposés en cercle.

De manière générale le capteur peut être disposé en surface ou sur la tranche du joint.

Ces capteurs CPC sont également particulièrement sensibles vis à vis d'une variation de température ou de vapeur organique diffusant au travers d'une membrane polymère. Par conséquent, les capteurs à base de CPC peuvent

aussi permettre de développer des systèmes de surveillance et de sécurité, pour donner rapidement l'alerte en cas de défaillance d'un joint. L'intérêt de la technologie proposée provient également de la facilité de fabrication des CPC, qui permet un développement à grande échelle, faible coût et ne nécessite pas d'investissement industriel lourd pour adapter les procédés de fabrication des joints existants.

A titre d'exemple de formulation, on disperse de 4 à 8 g.dm$^{-3}$ d'un mélange contenant 98 % en masse d'EP et 2 % de CNT dans du chloroforme en vue de la pulvérisation ultérieure, ce type de formulation peut particulièrement convenir pour le suivi de la compression d'un joint si les déformations attendues sont faibles < 0,5%.

Si l'on veut suivre des déformations plus importantes, et si les contraintes d'usage le permettent, il convient de substituer la matrice EP par un polymère de module plus faible et de nature élastomère comme un poly(uréthane) thermoplastique (TPU) que l'on mettra en solution dans le tétrahydrofurane (THF) dans lequel on dispersera 3% m/m de CNT.

La mise en oeuvre de joints d'étanchéité comprenant un capteur CPC selon l'invention est présentée dans la partie consacrée aux exemples. Plus particulièrement, la sensibilité des CPC à la pression, à la température et aux vapeurs organiques ont été testée.

## Utilisations

## Application dans de composites structuraux (nautisme, éoliennes, automobile, aéronautique)

### État de l'art du suivi de santé des composites structuraux (SHS)

De manière générale, différentes techniques existent pour parvenir au suivi de santé des structures composites : jauges métalliques, ultrasons, fibres optiques, accéléromètre, capteurs CPC. Les but du monitoring de déformation et d'endommagement des structures composites est à la foi d'optimiser leur maintenance (éoliennes offshore, aéronautiques) et d'anticiper leur rupture catastrophique (pales, mats d'éoliennes, ailes, tronçon d'avions, mats, flotteurs, hydrofoils de voilier, châssis, caisses de voitures).

#### *Les capteurs fibre optiques*

Cependant la dimension du coeur des fibres est comprise entre 50 et 150 μm ce qui en fait des éléments relativement intrusifs lorsqu'ils sont insérés dans des composites dont les fibres ont un diamètre de 10 μm. De plus les fibres optiques sont sensibles aux composés organiques comme l'humidité ou certains réactifs des polymères, il faut donc les protéger par une gaine polymère qui les rend aussi plus compatible avec la matrice polymère du composite. Cette opération contribue encore à augmenter le diamètre des fibres optiques de 60 à 100 μm.

D'autre part les fibres optiques ne détectent que les élongations dans un domaine de déformation élastique, ou il ne se produit pas d'endommagement ce qui est justement ce que l'on cherche à caractériser.

Enfin, le coût de l'instrumentation nécessaire à l'acquisition et au traitement des signaux optiques ne permet par son développement à grande échelle pour couvrir de grandes pièces composites et réaliser des réseaux.

#### *Les capteurs ultrasoniques*

Les capteurs ultrasoniques permettent de détecter la rupture de fibres ou de l'interface fibre matrice mais pas les déformations, et ne peuvent facilement localiser les dommages car pas intégrables à coeur. Les matériaux de renfort peuvent absorber les ultrasons et rendre difficile l'interprétation des signaux. Dans la pratique ils ne servent qu'à savoir si le niveau de déformation à ne pas dépasser a été atteint, mais il est alors en général trop tard.

#### *Les jaunes métalliques*

Les jauges métalliques sont hétérogènes, elles doivent être collées, ne sont pas intégrables, et leur sensibilité est faible par rapport aux QRS dont le facteur de jauge peut être adapté en fonction de la gamme de déformation du matériau à suivre.

#### *Les accéléromètres*

Les accéléromètres sont d'une taille importante, qui ne permet pas leur intégration à coeur, et nécessite un collage en surface des matériaux dont on souhaite suivre la santé. D'autre part leur positionnement doit être très précis les uns par rapport aux autres.

Il est difficile de prédire la rupture des composites polymères structuraux car les fissures pouvant exister à

l’intérieur notamment à l’interface entre les fibres de renfort et la matrice polymère peuvent provoquer l’endommagement du matériau sans signe avant coureur notamment en surface.

Il est donc très intéressant de pouvoir développer un système de suivi de santé des composites, le moins intrusif possible c’est-à-dire de petite taille et nature compatible voire identique à celle du composite et renseignant sur le niveau de déformation et la présence de fissures avant la rupture complète. Le capteur selon l’invention a un effet de mémorisation des endommagements et stress subits par le matériau à surveiller.

Les capteurs selon l’invention répondent à ce besoin.

En outre le capteur selon l’invention peut également être utilisé pour le suivi de cuisson des composites ou le contrôle des moules composites qui servent à les fabriquer ou encore pour surveiller le processus de durcissement de la structure composite *in situ*.

On a illustré sur la figure 17 un câble composite CF-EP pour hauban de voilier instrumenté par des capteurs CPC. Le hauban de voilier utilisé est en composite fibres de carbone/poly(époxy). La figure 17 présente la disposition des capteurs CPC sur le câble CF-EP d’un hauban ainsi que le schéma d’implantation des capteurs CPC sur le câble CF-EP et le détail des connections.

Les capteurs EP-CNT ont été au préalable testés au laboratoire en mode statique. Selon la figure 17, quatre capteurs CPC ont été disposés sur des échantillons de câbles CF-EP de même nature que ceux utilisés pour les haubans mais comportant deux boucles pour pouvoir être installés sur une machine de traction.

Sont présentés sur la figure 18 les résultats des essais de traction statiques sur les capteurs CPC en surface d’un câble CF-EP, soumis à une charge L. On a illustré pour quatre capteurs 1, 2, 3 et 4 la variation de résistance $\Delta R/R_0$ en %, la charge L et la déformation D en fonction du temps t à la figure 18 (a) et en fonction de la déformation à la figure 18 (b). Sur la figure 18 (c), on a illustré le facteur de jauge G et la résistance initiale $R_0$ pour chacun des capteurs 1, 2, 3 et 4. On voit sur la figure 18 (a) que les signaux des quatre capteurs 1, 2, 3 et 4 sont reproductibles et suivent convenablement la déformation D du câble jusqu’à une déformation de 0,3 % proche de la limite élastique. Tous les capteurs ont un facteur de jauge proche de GF = 4,5 ce qui représente plus du double de la sensibilité des jauges de déformation métalliques standard.

Le même type d’échantillons a été utilisé pour des essais de sollicitation en mode dynamique. Sont présentés sur la figure 19 les réponses des capteurs CPC en mode dynamique à 0,5 et 1 Hz sous une sollicitation de +/- 1 kN. On a illustré pour un capteur CPC la variation de résistance $\Delta R/R_0$ en %, et la charge L en fonction du temps à une fréquence de 1 Hz à la figure 19 (a), à une fréquence de 0,5 HZ à la figure 19 (b) et pour deux capteurs 1 et 2 différents à une fréquence de 0,5 Hz à la figure 19 (c). Enfin, la déformation D est illustrée à la figure 19 (d). On voit sur la figure 19 que les capteurs suivent très bien les déformations rapides aux fréquences 0,5 et 1 Hz.

Dans les conditions réelles de sollicitation mécaniques lors d’une sortie en mer les enregistrements reportés sur la figure 20 ont pu être obtenus.

Sont présentés sur la figure 20, les enregistrements de deux capteurs CPC 1 et 2 et d’une jauge métallique G implémentés en surface d’un câble de hauban lors d’une sortie en mer. Pour les différents types de sollicitations (provoqués, vagues, empannage...) D les capteurs CPC 1 et 2 et la jauge métallique G donnent des résultats analogues. Par contre les signaux sont plus complexes à analyser qu’en laboratoire. On a illustré sur la figure 20 la variation de résistance $\Delta R/R_0$ en %, et la déformation D en fonction du temps t.

## EXEMPLES

Les exemples qui suivent illustrent l’invention sans en limiter la portée.

### 1. Exemples de capteur

Exemple 1 :

Des films de poly(uréthane) thermoplastiques TPU contenant 33 % en masse de segment dur (Dupont) d’une épaisseur d’environ 1,5 mm ont été pressés à chaud et sous 20 bars à 160 °C pour être utilisés comme substrats de capteurs TPU contenant 2% m/m de CNT dispersion en solution dans le THF sous sonification pendant 1h.

Exemple 2 : (voie liquide)

Des capteurs CPC ont été fabriqués en dispersant 2 % de CNT m/m dans la DGEBA et le chloroforme sous sonification pendant 1h.

2. Exemples de joints d'étanchéité

Afin de montrer l'utilisation des capteurs CPC selon l'invention dans des joints, la sensibilité des CPC à la pression, à la température et aux vapeurs organiques a été testée.

*Sensibilité à la pression*

Les propriétés piézo-résistives de deux types de capteurs CPC sous pression ont été mesurées en utilisant le système de test uniaxial de pression dynamique consistant en une machine d'essai universelle (INSTRON 5566A) instrumentée par deux électromètres (Fluke 8842A et 8846A) commandé par un programme développé sous LabVIEW. Pour tester le comportement piézo-résistif en pression, les capteurs CPC préparés ont été reliés à un multimètre pour mesure de résistance. La contrainte de compression imposée par la machine de test a été appliquée perpendiculairement aux capteurs donnant des réponses de résistance relative différentielles. Les réponses de résistance relatives différentielles ($A_R$) des capteurs ont été recueillies avec un multimètre PICOTEST et définis par l'équation ci-dessous :

$$A_R = \frac{\Delta R}{R_0} = \frac{R - R_0}{R_0}$$

La figure 21 illustre la réponse résistive (résistance R) d'un capteur CPC TPU-3% CNT et la charge L appliquée en fonction du temps t.

Sur la figure 21 on voit clairement que la réponse résistives des deux types de capteurs est de type NSC (Negative Strength Coefficient), c'est à dire en opposition de phase par rapport à la sollicitation mais parfaitement synchrone et reproductible.

La figure 22 illustre la réponse piézo-résistive, à savoir la variation de résistance $\Delta R/R_0$ en % des capteurs EP-2%CNT et TPU-3%CNT en fonction de la pression P appliquée. L'on voit que globalement les capteurs TPU-3%CNT sont plus sensibles que les capteurs EP-2%CNT.

*Sensibilité à la température*

Sur la figure 23 est présentée la réponse thermo-résistive $\Delta R/R_0$ des capteurs EP-2%CNT et TPU-3%CNT à des échelons de température, en fonction du temps.

Lors des essais ou les échantillons sont soumis à des échelons de température, les deux capteurs EP-2%CNT et TPU-3%CNT répondent avec la même dynamique, même si la sensibilité du premier est légèrement supérieure, par contre lorsqu'ils sont soumis à une rampe de température la sensibilité du capteur TPU-3%CNT est plus importante.

*Sensibilité aux vapeurs organiques*

Des capteurs CPC de TPU-3% CNT ont été pulvérisés sur des films de PLA pour vérifier leur sensibilité au VOC et montrer leur capacité à détecter des fuites de liquides ou de vapeur dans les joints.

Sur la figure 24 est présentée la réponse chémo-résistive du TPU-3%CNT déposé sur un film de PLA exposé au THF. On a illustré l'évolution de la sensibilité de la résistance $\Delta R/R_0$ en fonction du temps pour quatre capteurs 1, 2, 3 et 4. Les capteurs 1 à 3 sont des capteurs à électrodes, et le capteur 4 est un capteur film.

Sur la figure 25 est présentée la réponse chémo-résistive du TPU-3%CNT déposé sur un film de PLA exposé au $CHCl_3$ pour les mêmes capteurs 1, 2, 3 et 4 qu'à la figure 24.

Sur la figure 26 est présentée la réponse chémo-résistive du TPU-3%CNT déposé sur un film de PLA exposé au toluène pour les mêmes capteurs 1, 2, 3 et 4 qu'à la figure 24.

*Conclusion sur les capteurs CPC intégrables dans les joints*

La validation du concept de capteurs CPC à matrice TPU ou EP chargée de CNT fabriqués par pulvérisation LbL sur un substrat thermoplastique (TPU) sensibles à la des pressions de 0,1 à 3,3 MPa a été faite. Ces capteurs piézo-résistifs ont donnés des signaux, sensibles, reproductibles, et faiblement bruités, basée sur l'effet tunnel quantique QRS entre charges conductrices de CNT.

En outre, des expériences complémentaires ont également démontré que ces capteurs CPC sont sensibles à la température sur une plage de 20 à 120 °C, aux vapeurs organiques de THF de chloroforme et de toluène lorsqu'ils sont déposés sur une membrane en PLA, suggérant que ces capteurs CPC peuvent éventuellement détecter la des

fuites de fluides.

Pour des applications à des températures plus élevées il faut envisager de changer la matrice TPU par un polymère stable à plus haute température tel que le poly(éther-éther-cétone) PEEK, poly(siloxane) ou le poly(imide).

## Revendications

1. Capteur d'une caractéristique physique, comportant une structure multicouche comportant :

   - au moins une couche électriquement conductrice, comportant des nanocharges dans une matrice polymère comprenant au moins un polymère,
   - et des moyens de connexion électrique,

   ladite structure étant thermodurcissable, thermoplastique, ou étant un élastomère réticulable,
   **caractérisé en ce que** lorsque la structure est thermodurcissable alors son taux de réticulation est supérieur à 80%, mieux à 90%, voire à 95%,
   lorsque la structure est un élastomère réticulable alors elle comprend un taux d'agent réticulant allant de 5% à 20% en moles par rapport au nombre de moles de la structure, et
   lorsque la structure est thermoplastique alors elle présente une valeur constante de la résistivité et de préférence un taux de cristallinité allant de 0% à 60%,
   ledit capteur comportant un nombre de couches électriquement conductrices d'au moins 2 couches.

2. Capteur selon la revendication précédente, comportant un nombre de couches électriquement conductrices allant de 2 à 100 couches, voire de 2 à 90, mieux de 3 à 80, notamment de 20 à 70, par exemple de 40 à 50.

3. Capteur selon l'une quelconque des revendications précédentes comportant une couche de substrat sur laquelle sont déposées les couches électriquement conductrices, avantageusement le substrat est une couche isolante, comportant au moins un polymère, ledit polymère pouvant être identique ou différent du polymère de la couche électriquement conductrice.

4. Capteur selon l'une quelconque des revendications précédentes **caractérisé en ce qu'**il est sous forme d'un patch.

5. Capteur selon l'une quelconque des revendications précédentes, dans lequel la structure multicouche est pliée en deux.

6. Capteur selon l'une quelconque des revendications précédentes, dans lequel les nanocharges sont choisies dans la liste suivante : nanoparticules de carbone, noir de carbone, nanotubes de carbone, graphène, fullerène, nanoparticules métalliques, nanoparticules d'argent, nanoparticules d'or, nanoparticules de nickel.

7. Capteur selon l'une quelconque des revendications précédentes, dans lequel les couches électriquement conductrices ont une épaisseur allant de 20 à 100 nm, de préférence de 30 à 60 voire de 40 à 50 nm.

8. Capteur selon l'une quelconque des revendications précédentes, dans lequel la matrice polymère comporte un polymère choisi dans la liste suivante : élastomère, par exemple poly(siloxane), poly(uréthane), poly(isoprène), poly(butadiène).

9. Matériau, notamment matériau composite, comportant au moins un capteur selon l'une des revendications 1 à 8.

10. Matériau composite selon la revendication précédente, dans lequel au moins un capteur est inséré directement en surface de fibres dudit matériau composite, par exemple de fibres de verre ou de carbone du matériau composite.

11. Matériau composite selon l'une des deux revendications précédentes, comportant au moins un capteur inséré dans une matrice, par exemple polymère, du matériau composite.

12. Matériau composite selon l'une des trois revendications précédentes, dans lequel une matrice polymère du matériau composite comporte un polymère compatible, voire identique, à un polymère de la matrice polymérique du capteur ou du précurseur de capteur.

**13.** Utilisation d'un capteur selon l'une quelconque des revendications 1 à 8, dans un câble ou dans la fabrication d'un câble.

**14.** Utilisation d'un capteur selon l'une quelconque des revendications 1 à 8 dans un tube ou dans la fabrication d'un tube.

**15.** Utilisation d'un capteur selon l'une quelconque des revendications 1 à 8, dans une éolienne, une turbine ou une hydrolienne ou dans la fabrication d'une éolienne, une turbine ou une hydrolienne, ou dans un joint d'étanchéité, le joint d'étanchétité comportant notamment au moins un capteur d'une caractéristique physique, pouvant comporter une structure multicouche comportant :

- au moins deux, notamment au moins trois, couches électriquement conductrices comportant des nanocharges, lesquelles peuvent être notamment enrobées, dans une matrice polymère comprenant au moins un polymère, et
- des moyens de connexion électrique,

la structure multicouche ayant notamment été soumise à un cycle de cuisson contrôlé, le joint pouvant notamment comporter au moins un capteur ou un précurseur de capteur inséré à la surface du joint.

## Patentansprüche

**1.** Sensor für ein physisches Merkmal, umfassend eine Mehrschichtstruktur, umfassend:

- mindestens eine elektrisch leitende Schicht, umfassend Nanofüllstoffe in einer Polymermatrix, umfassend mindestens ein Polymer,
- und elektrische Anschlussmittel,

wobei die Struktur wärmehärtend, thermoplastisch ist oder ein vernetzbares Elastomer ist,
**dadurch gekennzeichnet, dass**, wenn die Struktur wärmehärtend ist, ihr Vernetzungsgrad über 80 %, besser über 90 %, ja sogar über 95 % liegt,
wenn die Struktur ein vernetzbares Elastomer ist, sie dann einen Gehalt an Vernetzungsmittel im Bereich von 5 bis 20 Mol-%, bezogen auf die Anzahl der Mole der Struktur, aufweist und,
wenn die Struktur thermoplastisch ist, sie einen konstanten Wert des spezifischen Widerstands und vorzugsweise einen Kristallinitätsgrad von 0 % bis 60 % aufweist,
wobei der Sensor eine Anzahl an elektrisch leitenden Schichten von mindestens zwei Schichten aufweist.

**2.** Sensor nach dem vorhergehenden Anspruch, umfassend eine Anzahl an elektrisch leitenden Schichten von 2 bis 100 Schichten, ja sogar von 2 bis 90, besser von 3 bis 80, insbesondere von 20 bis 70, beispielsweise von 40 bis 50, aufweist.

**3.** Sensor nach einem der vorhergehenden Ansprüche, umfassend eine Substratschicht, auf der die elektrisch leitenden Schichten aufgebracht sind, das Substrat ist vorteilhafterweise eine isolierende Schicht, die mindestens ein Polymer umfasst, wobei das Polymer zu dem Polymer der elektrisch leitenden Schicht identisch oder davon verschieden sein kann.

**4.** Sensor nach einem der vorhergehenden Ansprüche, **dadurch gekennzeichnet, dass** er in Form eines Patches ist.

**5.** Sensor nach einem der vorhergehenden Ansprüche, wobei die Mehrschichtstruktur in zwei Hälften gefaltet ist.

**6.** Sensor nach einem der vorhergehenden Ansprüche, wobei die Nanofüllstoffe aus der folgenden Liste ausgewählt sind: Nanopartikel aus Kohlenstoff, Ruß, Nanoröhrchen aus Kohlenstoff, Graphen, Fulleren, Metall-Nanopartikel, Silber-Nanopartikel, Gold-Nanopartikel, Nickel-Nanopartikel.

**7.** Sensor nach einem der vorhergehenden Ansprüche, wobei die elektrisch leitenden Schichten eine Dicke von 20 bis 100 nm, vorzugsweise von 30 bis 60, ja sogar von 40 bis 50 nm, aufweisen.

**8.** Sensor nach einem der vorhergehenden Ansprüche, wobei die Polymermatrix ein Polymer umfasst, das aus der folgenden Liste ausgewählt ist: Elastomer, beispielsweise Polysiloxan, Polyurethan, Polyisopren, Polybutadien.

9. Material, insbesondere Verbundmaterial, umfassend mindestens einen Sensor nach einem der Ansprüche 1 bis 8.

10. Verbundmaterial nach dem vorhergehenden Anspruch, wobei mindestens ein Sensor direkt in die Faseroberfläche, beispielsweise Glasfasern oder Kohlenstoff, des Verbundmaterials eingefügt ist.

11. Verbundmaterial nach einem der zwei vorhergehenden Ansprüche, umfassend mindestens einen Sensor, der in eine Matrix, beispielsweise eine Polymermatrix, des Verbundmaterials eingefügt ist.

12. Verbundmaterial nach einem der drei vorhergehenden Ansprüche, wobei eine Polymermatrix des Verbundmaterials ein Polymer umfasst, das mit einem Polymer der Polymermatrix des Sensors oder des Sensorvorläufers kompatibel, ja sogar dazu identisch ist.

13. Verwendung eines Sensors nach einem der Ansprüche 1 bis 8 in einem Kabel oder bei der Herstellung eines Kabels.

14. Verwendung eines Sensors nach einem der Ansprüche 1 bis 8 in einem Rohr oder bei der Herstellung eines Rohrs.

15. Verwendung eines Sensors nach einem der Ansprüche 1 bis 8 in einer Windkraftanlage, einer Turbine oder einer Gezeitenturbine oder bei der Herstellung einer Windkraftanlage, einer Turbine oder einer Gezeitenturbine oder in einer Dichtung, wobei die Dichtung insbesondere mindestens einen Sensor für ein physisches Merkmal aufweist, der eine Mehrschichtstruktur aufweisen kann, umfassend:

   - mindestens zwei, insbesondere mindestens drei elektrisch leitende Schichten, umfassend Nanofüllstoffe, die insbesondere beschichtet sein können, in einer Polymermatrix, umfassend mindestens ein Polymer, und
   - elektrische Anschlussmittel,

   wobei die mehrschichtige Struktur insbesondere einem kontrollierten Einbrennzyklus unterzogen worden ist,
   wobei die Dichtung insbesondere mindestens einen Sensor oder Sensorvorläufer aufweisen kann, der auf der Oberfläche der Dichtung eingefügt ist.

## Claims

1. A sensor for a physical charateristic, comprising a multilayer structure comprising:

   - at least one electrically conductive layer, comprising nanofillers in a polymer matrix comprising at least one polymer,
   - and electrical connection means,

   said structure being thermosetting or thermoplastic or being a crosslinkable elastomer,
   **characterized in that**, when the structure is thermosetting, then the degree of crosslinking thereof is greater than 80%, better still greater than 90%, or even greater than 95%,
   when the structure is a crosslinkable elastomer, then it comprises an amount of crosslinking agent ranging from 5 mol% to 20 mol% relative to the number of moles of the structure, and
   when the structure is thermoplastic, then it has a constant resistivity value and preferably a degree of crystallinity ranging from 0% to 60%,
   said sensor comprising a number of electrically conductive layers of at least 2 layers.

2. The sensor as claimed in the preceding claim, comprising a number of electrically conductive layers ranging from 2 to 100 layers, or even from 2 to 90, better still from 3 to 80, in particular from 20 to 70, for example from 40 to 50.

3. The sensor as claimed in either one of the preceding claims, comprising a layer of substrate on which the electrically conductive layers are deposited, advantageously the substrate is an insulating layer comprising at least one polymer, said polymer possibly being identical to or different than the polymer of the electrically conductive layer.

4. The sensor as claimed in any one of the preceding claims, **characterized in that** it is in the form of a patch.

5. The sensor as claimed in any one of the preceding claims, wherein the multilayer structure is folded in two.

**6.** The sensor as claimed in any one of the preceding claims, wherein the nanofillers are chosen from the following list: carbon nanoparticles, carbon black, carbon nanotubes, graphene, fullerene, metal nanoparticles, silver nanoparticles, gold nanoparticles, nickel nanoparticles.

**7.** The sensor as claimed in any one of the preceding claims, wherein the electrically conductive layers have a thickness ranging from 20 to 100 nm, preferably from 30 to 60, or even from 40 to 50 nm.

**8.** The sensor as claimed in any one of the preceding claims, wherein the polymer matrix comprises a polymer chosen from the following list, which is not limiting: elastomer, for example poly(siloxane), poly(urethane), poly(isoprene), poly(butadiene).

**9.** A material, in particular a composite material; comprising at least one sensor as claimed in one of claims 1 to 8.

**10.** The composite material as claimed in the preceding claim, wherein at least one sensor is inserted directly at the surface of fibers of said composite material, for example of glass fibers or carbon fibers of the composite material.

**11.** The composite material as claimed in either of the two preceding claims, comprising at least one sensor inserted in a matrix, for example polymer matrix, of the composite material.

**12.** The composite material as claimed in one of the three preceding claims, wherein a polymer matrix of the composite material comprises a polymer compatible with, or even identical to, a polymer of the polymeric matrix of the sensor or of the sensor precursor.

**13.** The use of a sensor as claimed in any one of claims 1 to 8, in a cable or in the production of a cable.

**14.** The use of a sensor as claimed in any one of claims 1 to 8, in a tube or in the production of a tube.

**15.** The use of a sensor as claimed in any one of claims 1 to 8, in a wind turbine, a turbine or a water turbine or in the production of a wind turbine, a turbine or a water turbine, or in a leaktight seal, the leaktight seal in particular comprising at least one sensor for a physical characteristic, in particular comprising a multilayer structure comprising:

at least two, in particular at least three, electrically conductive layers comprising nanofillers, which may in particular be coated, in a polymer matrix comprising at least one polymer and

- electrical connection means,

the multilayer structure having in particular been subjected to a controlled curing cycle,
the seal in particular comprising at least one sensor or one sensor precursor inserted at the surface of the seal.

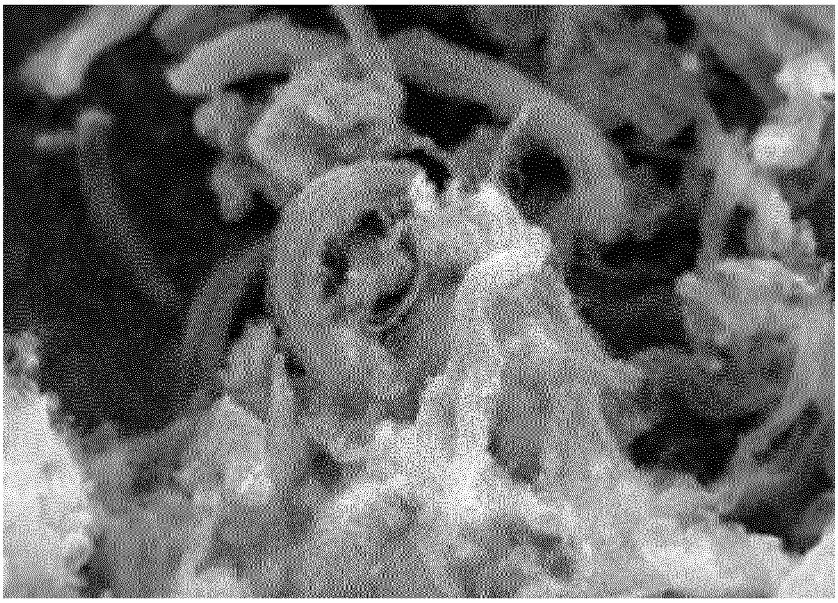

Fig. 1

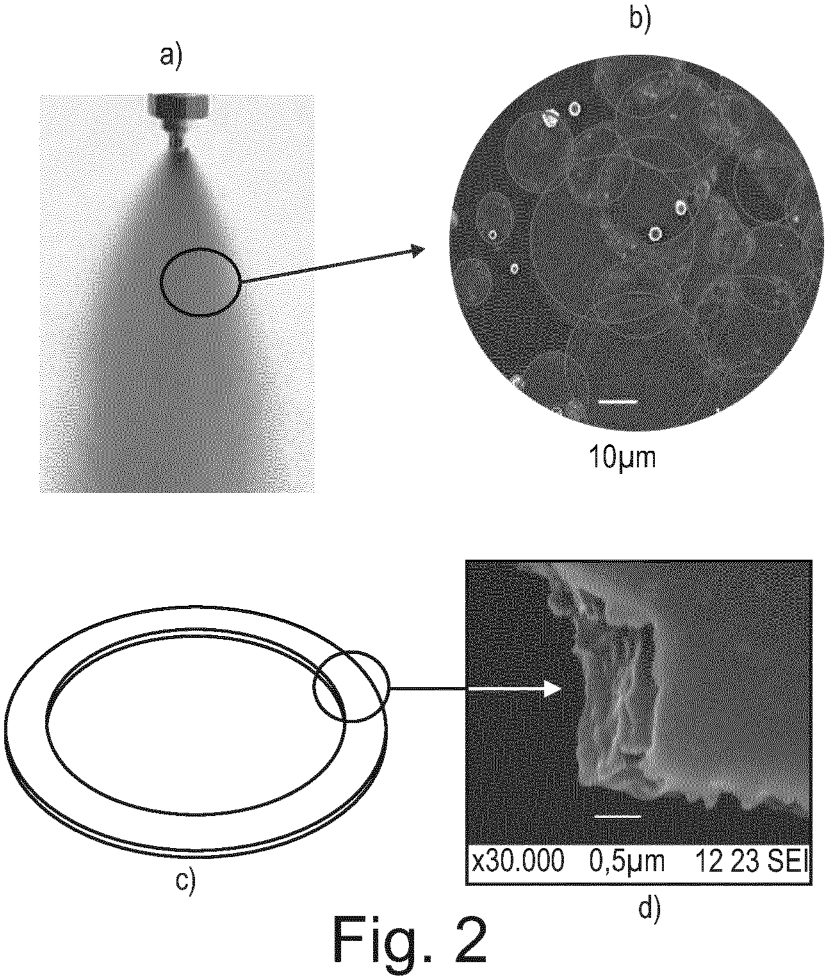


Fig. 2

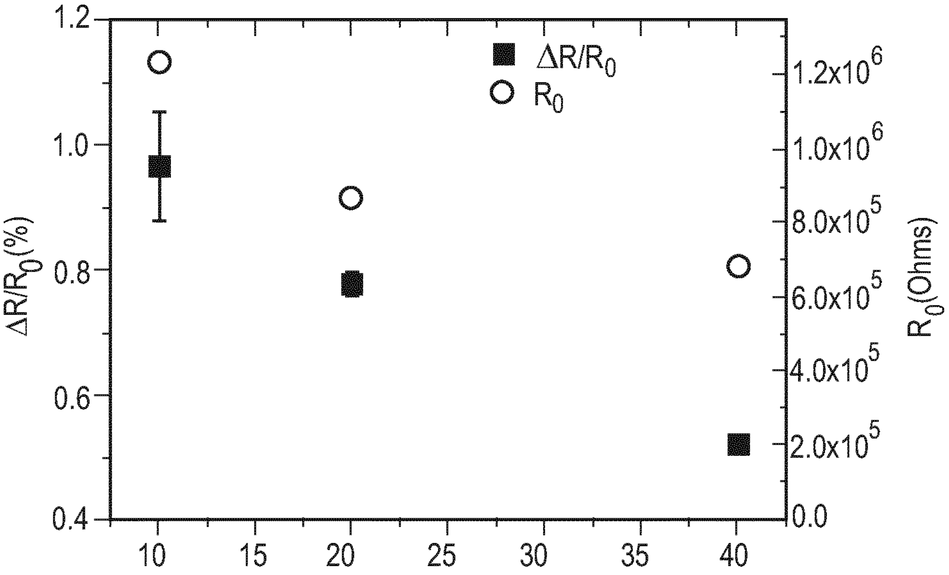
1.2
1.0
0.8
0.6
0.4
ΔR/R0(%)
10
15
20
25
30
35
40
ΔR/R0
R0
1.2x10^6
1.0x10^6
8.0x10^5
6.0x10^5
4.0x10^5
2.0x10^5
0.0
R0(Ohms)

Fig. 3

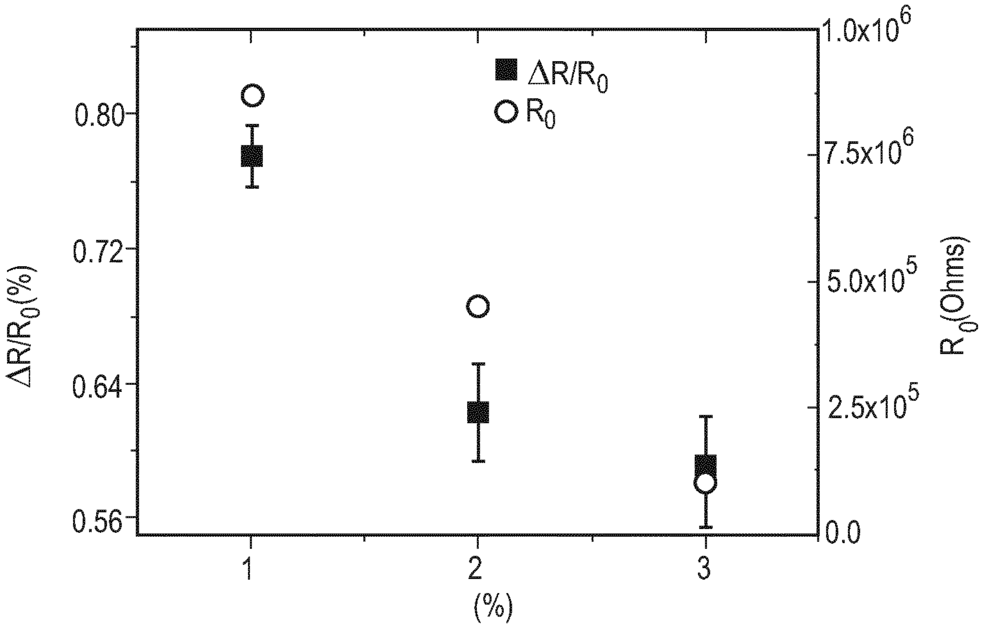
0.80
0.72
0.64
0.56
ΔR/R0(%)
1
2
3
(%)
ΔR/R0
R0
1.0x10^6
7.5x10^6
5.0x10^5
2.5x10^5
0.0
R0(Ohms)

Fig. 4

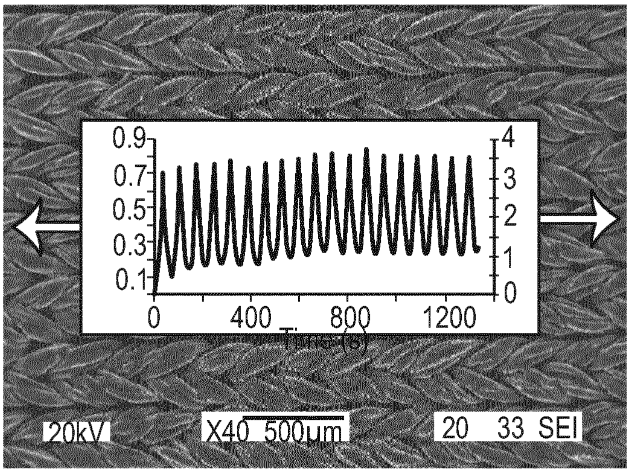


Fig. 5

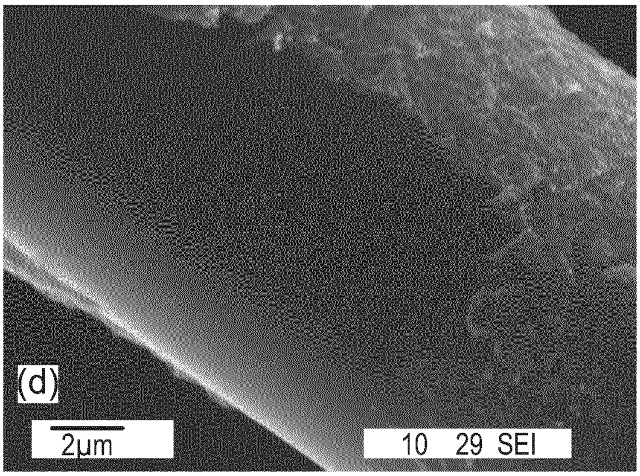


Fig. 6

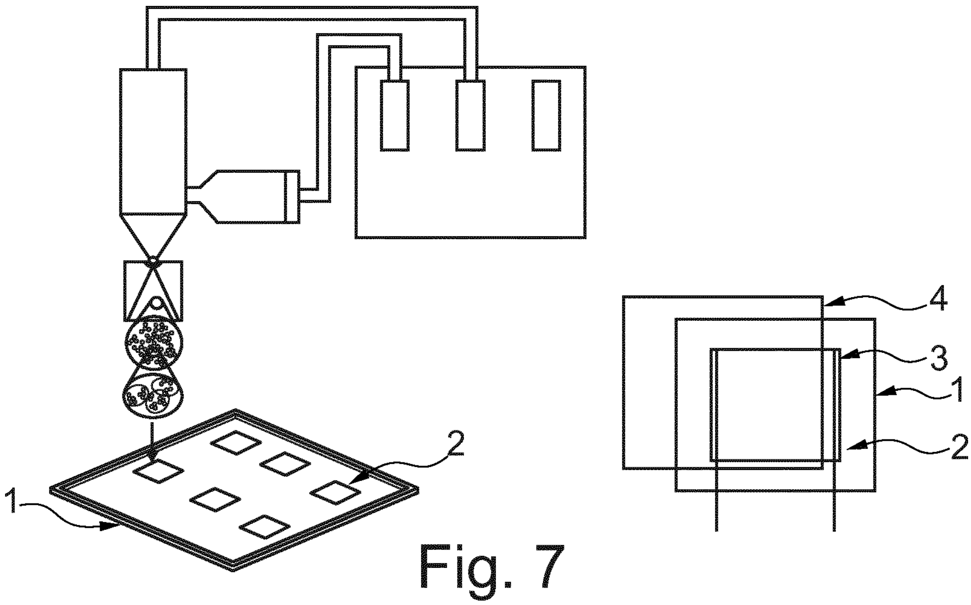


Fig. 7

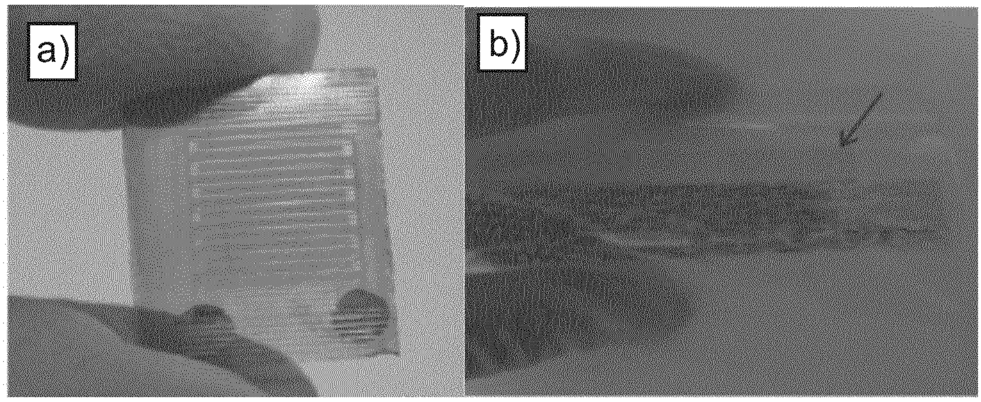


Fig. 8

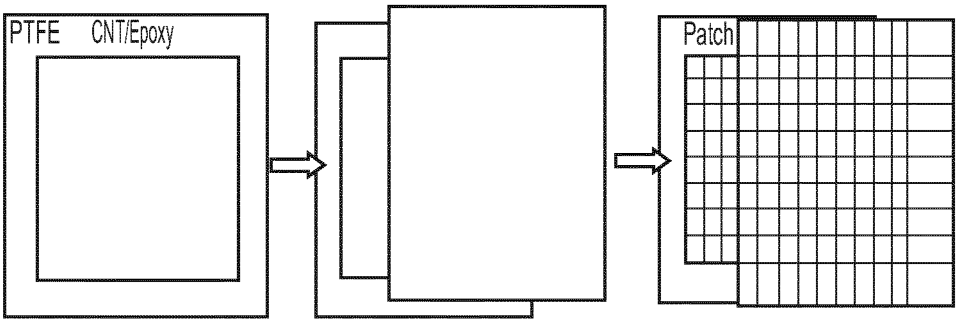


Fig. 9

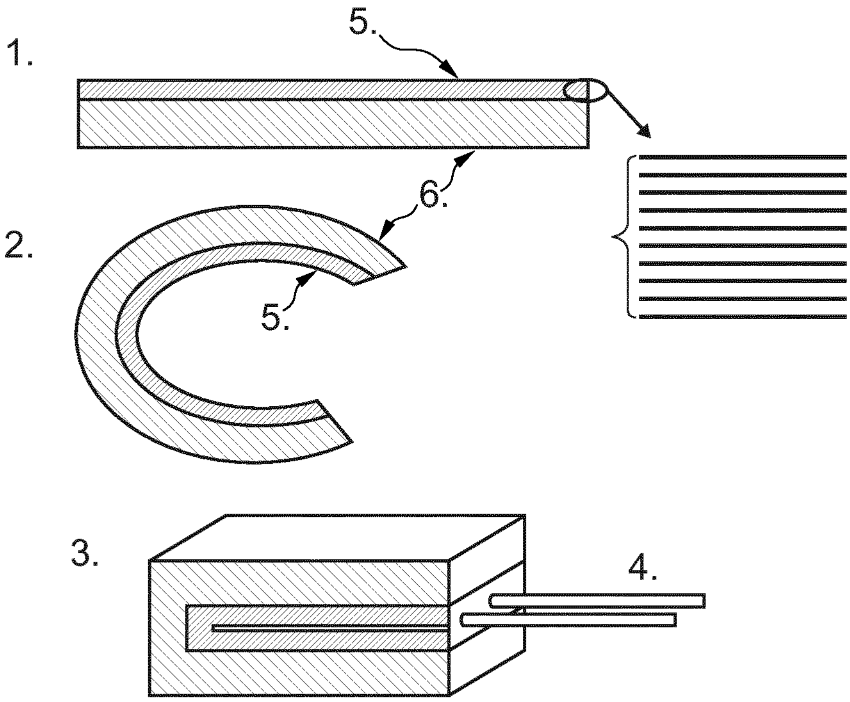


Fig. 10

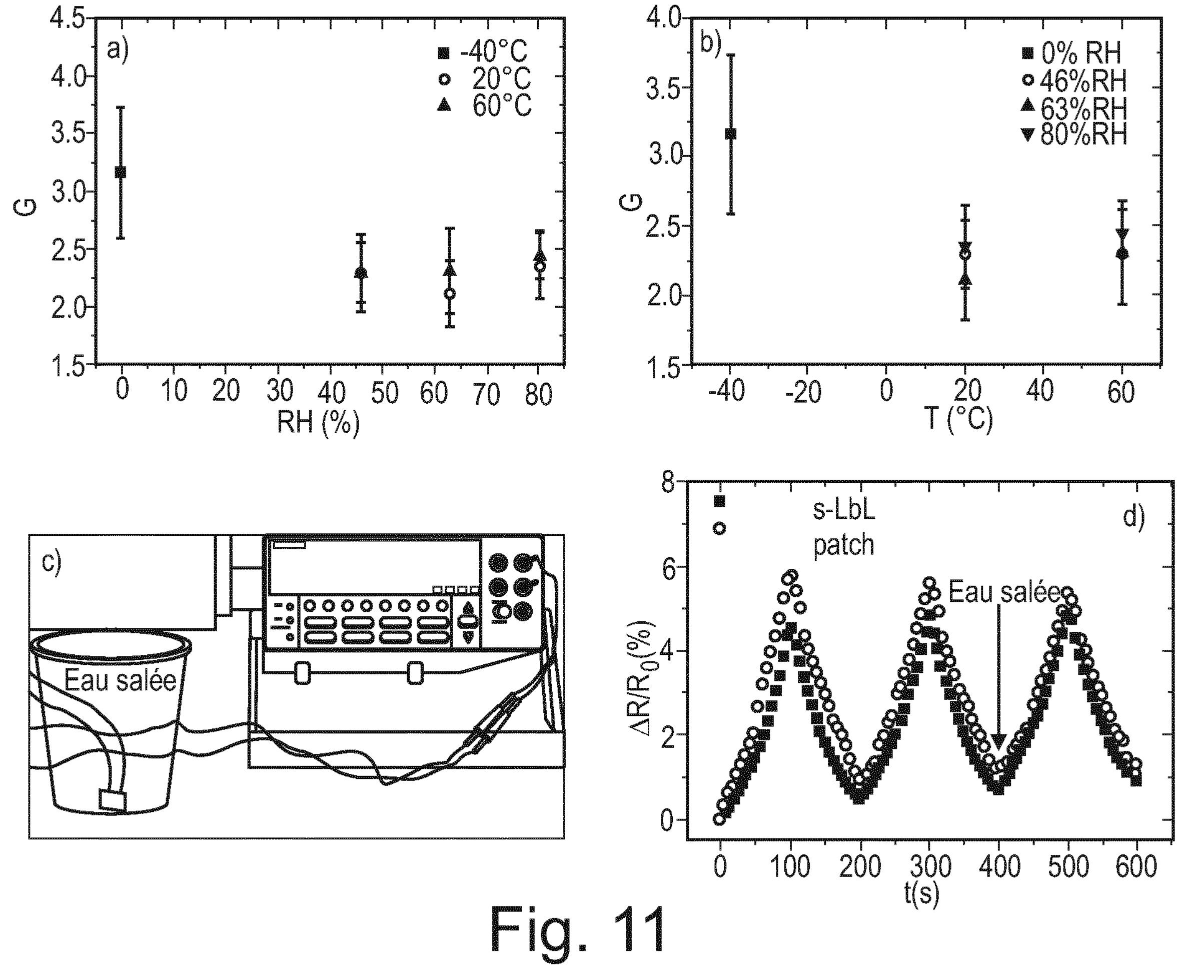

a)
-40°C
20°C
60°C
G
RH (%)
b)
0% RH
46%RH
63%RH
80%RH
T (°C)
c)
Eau salée
d)
s-LbL
patch
Eau salée
ΔR/R0(%)
t(s)


Fig. 11

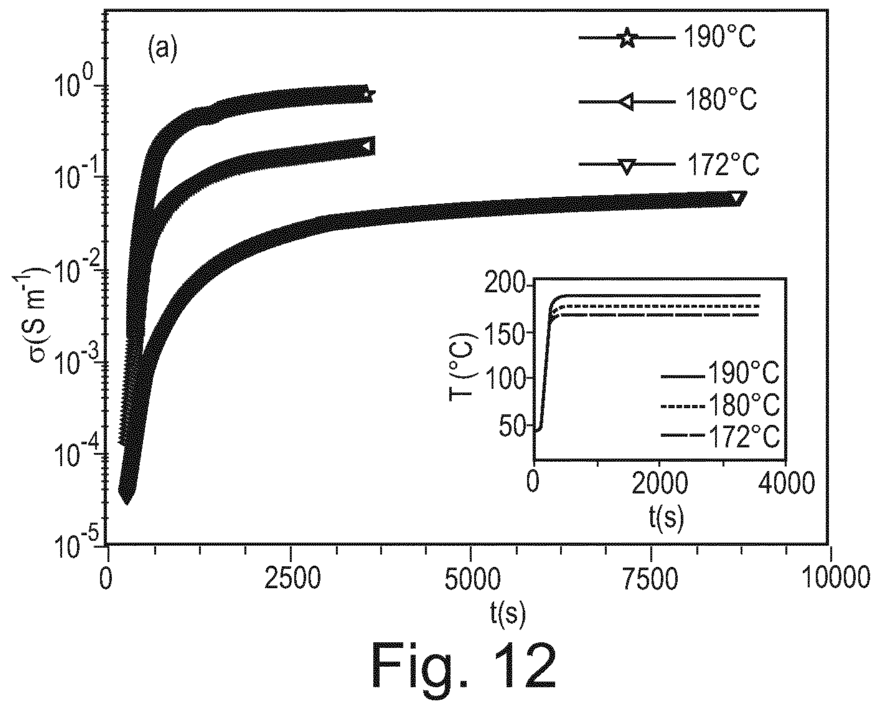

(a)
190°C
180°C
172°C
σ(S m-1)
T (°C)
t(s)


Fig. 12

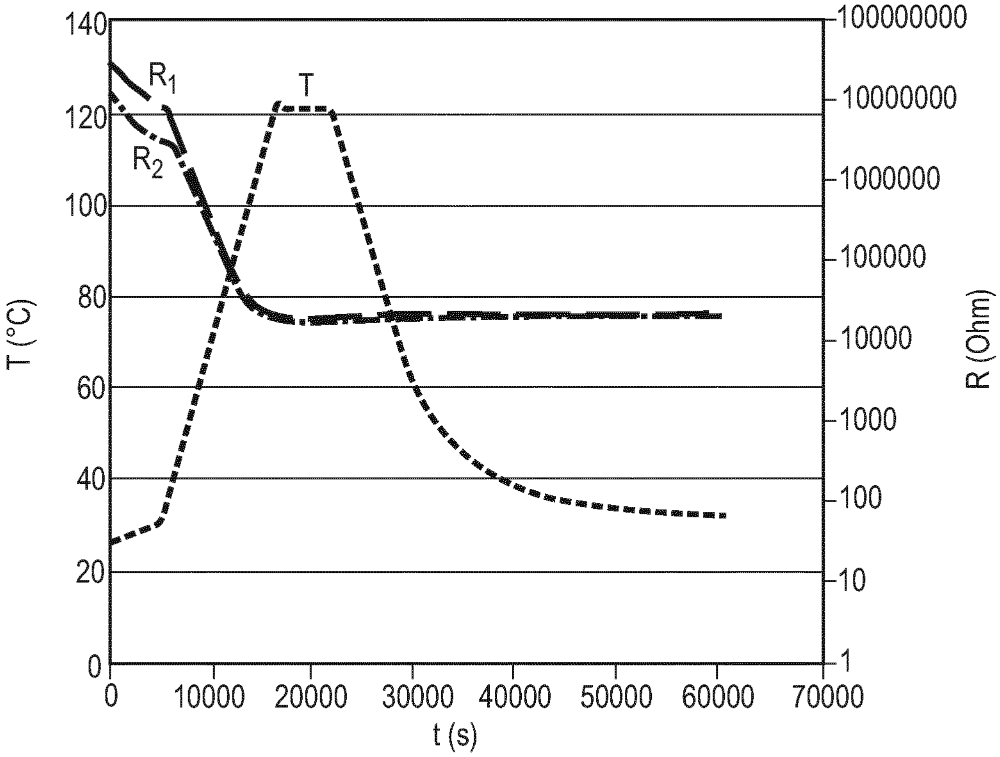
140
120
100
80
60
40
20
0
T (°C)
100000000
10000000
1000000
100000
10000
1000
100
10
1
R (Ohm)
$R_1$
$R_2$
T
0
10000
20000
30000
40000
50000
60000
70000
t (s)

Fig. 13

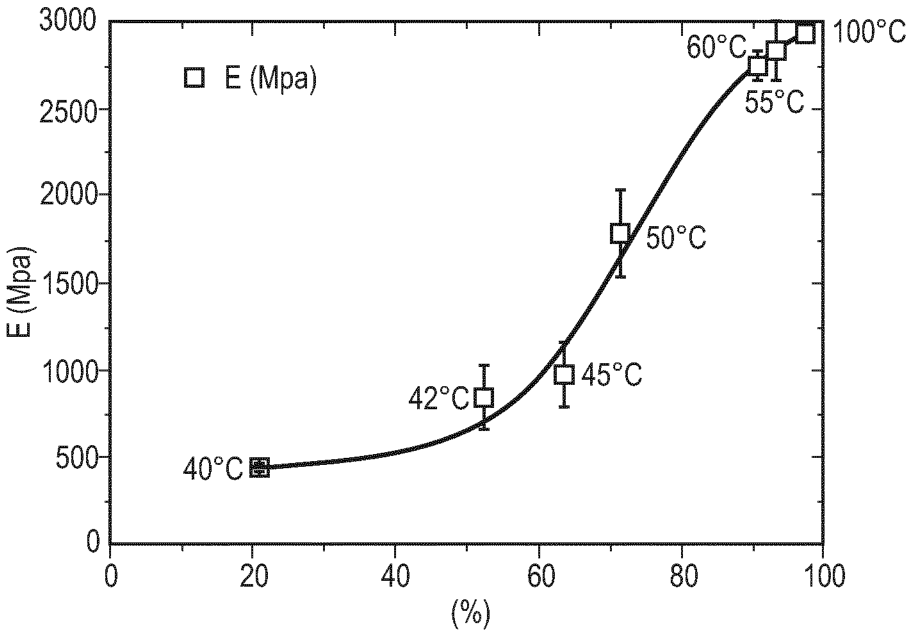
3000
2500
2000
1500
1000
500
0
E (Mpa)
E (Mpa)
60°C
100°C
55°C
50°C
45°C
42°C
40°C
0
20
40
60
80
100
(%)

Fig. 14

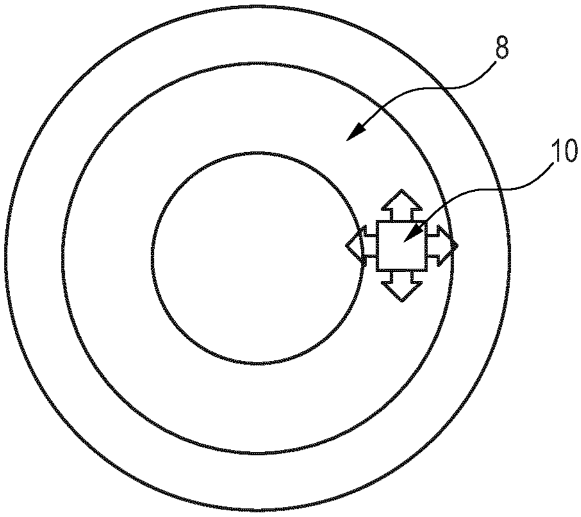


Fig. 15

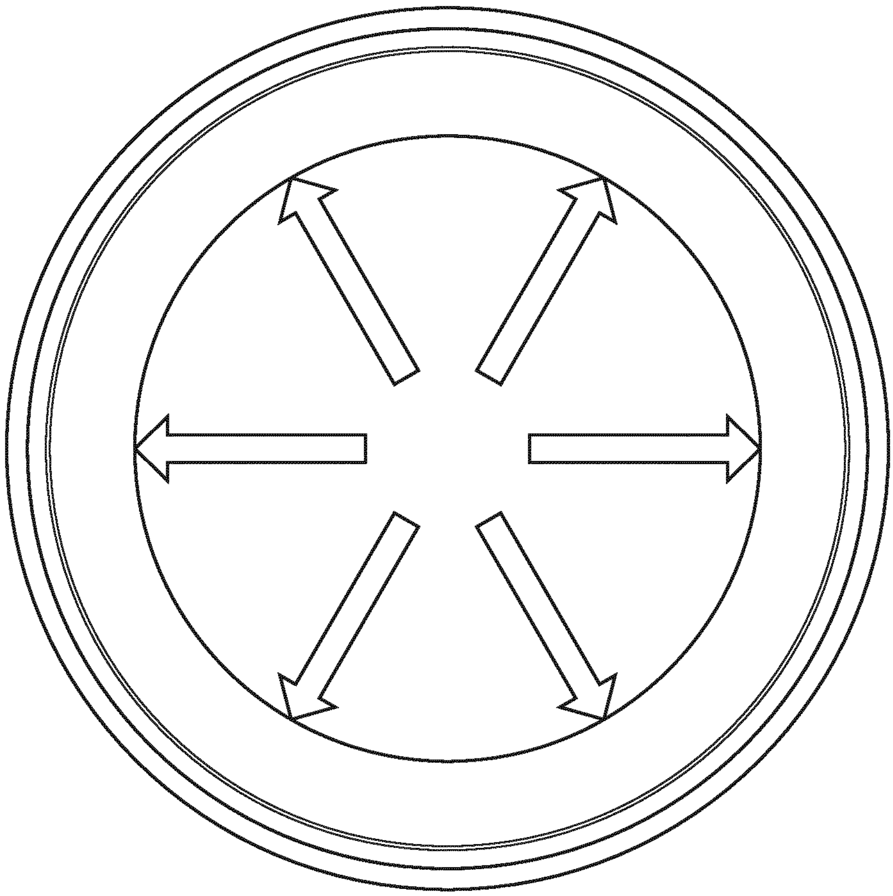

Fig. 16

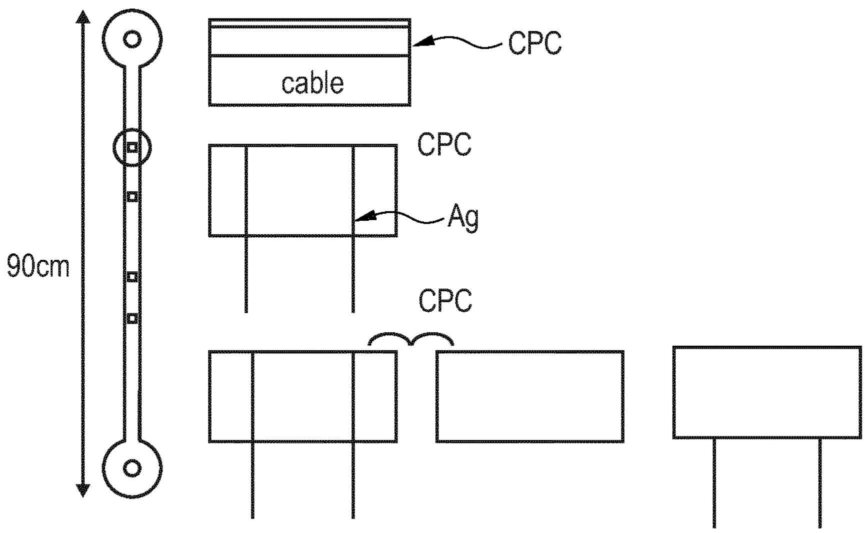
CPC
cable
CPC
Ag
90cm
CPC

Fig. 17

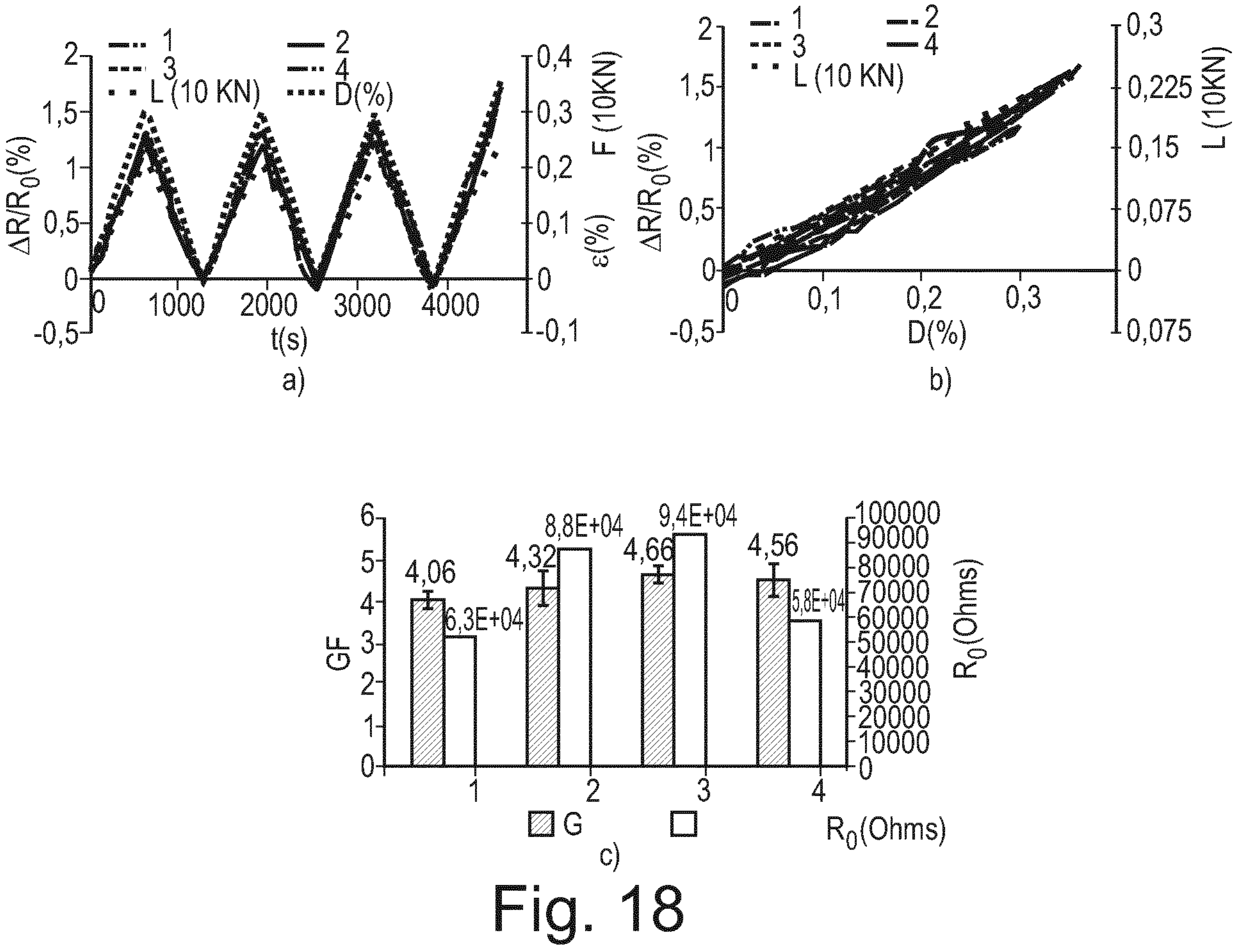
1
2
3
4
L (10 KN)
D(%)
ΔR/R0(%)
F (10KN)
ε(%)
t(s)
a)
L (10KN)
D(%)
b)
4,06
4,32
4,66
4,56
6,3E+04
8,8E+04
9,4E+04
5,8E+04
GF
R0(Ohms)
G
c)

Fig. 18

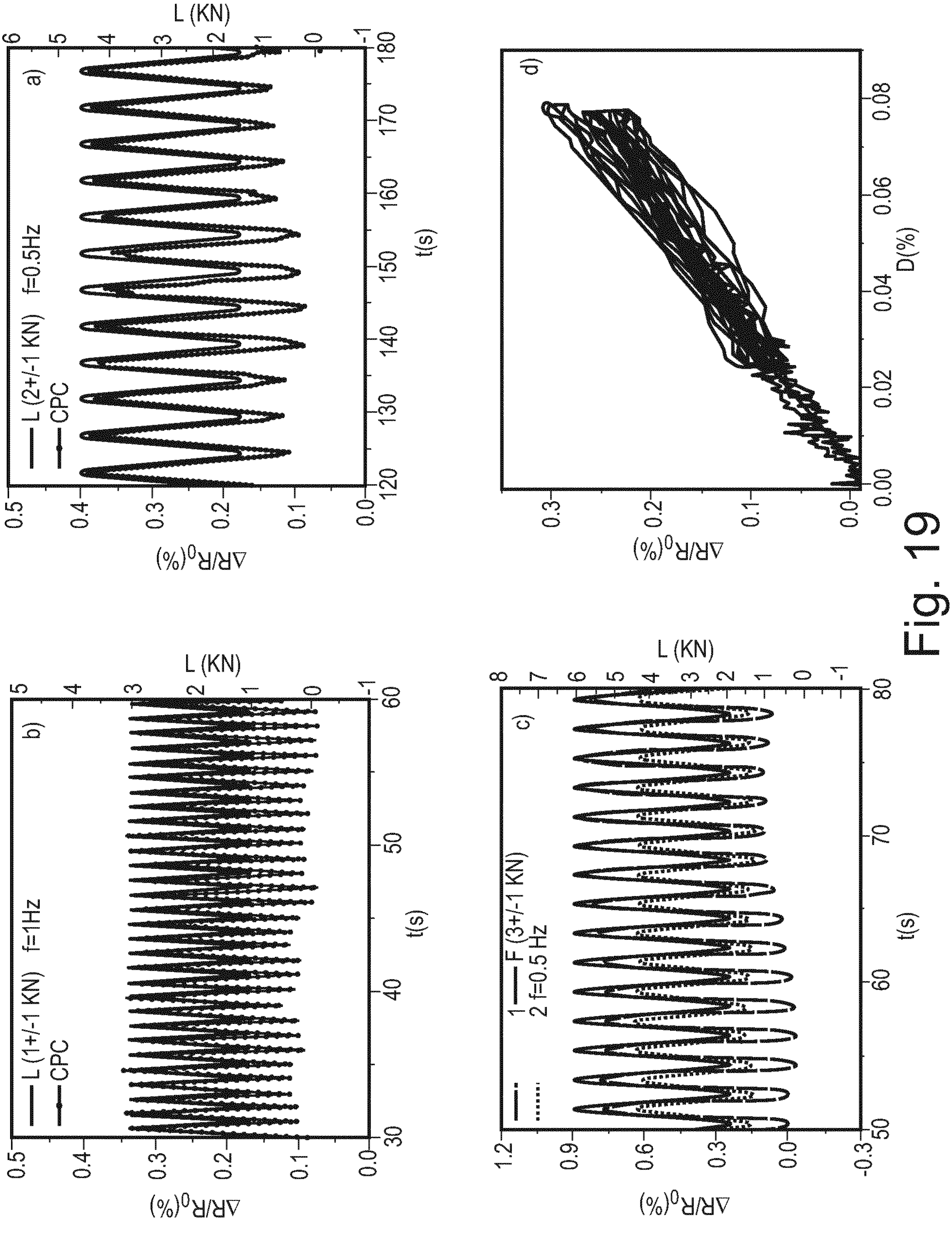
a)
L (2+/-1 KN) f=0.5Hz
CPC
ΔR/R0(%)
t(s)
L (KN)
b)
L (1+/-1 KN) f=1Hz
CPC
ΔR/R0(%)
t(s)
L (KN)
c)
1 F (3+/-1 KN)
2 f=0.5 Hz
ΔR/R0(%)
t(s)
L (KN)
d)
ΔR/R0(%)
D(%)

Fig. 19

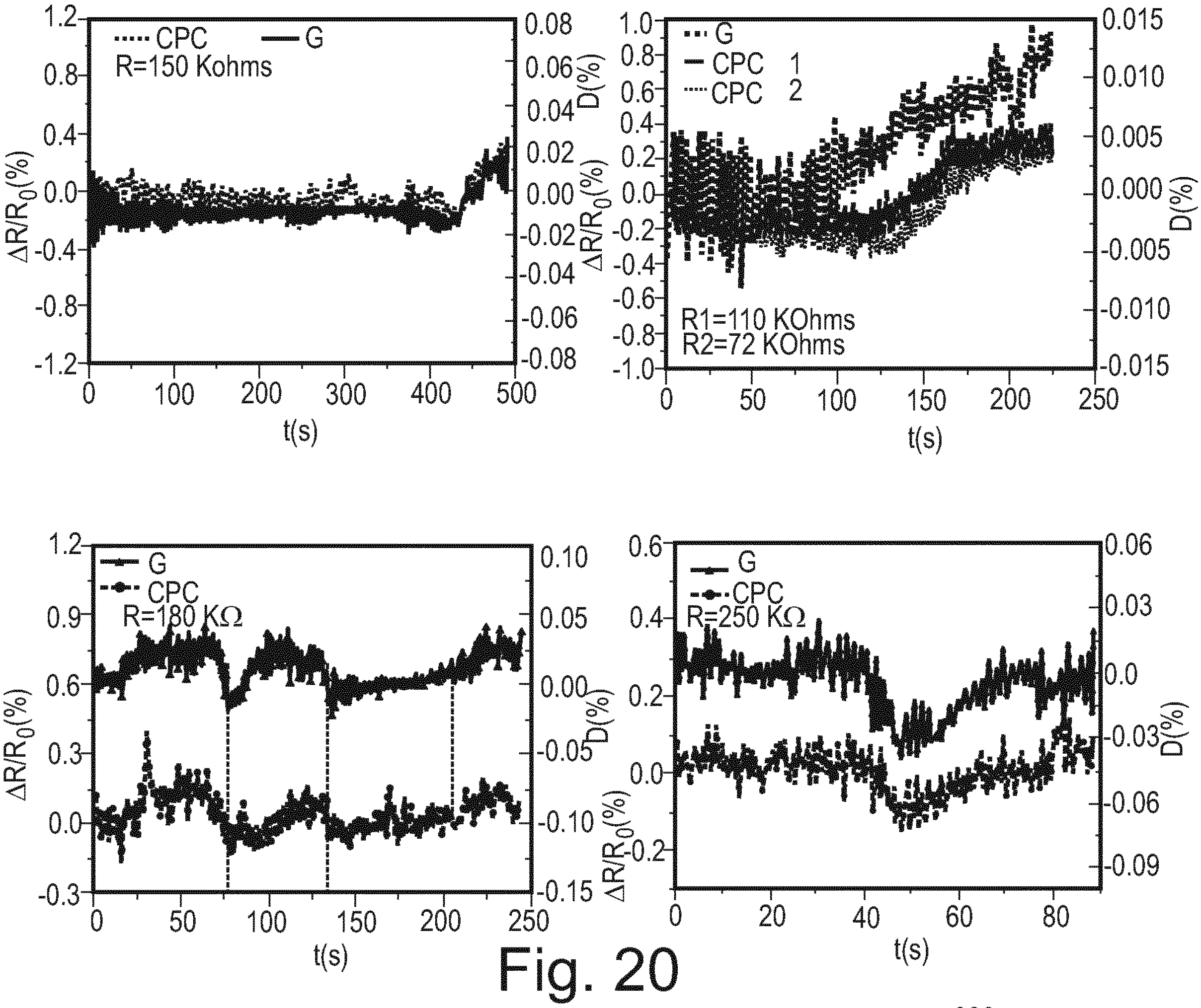
CPC
G
R=150 Kohms
ΔR/R0(%)
D(%)
t(s)
G
CPC 1
CPC 2
R1=110 KOhms
R2=72 KOhms
G
CPC
R=180 KΩ
R=250 KΩ

Fig. 20

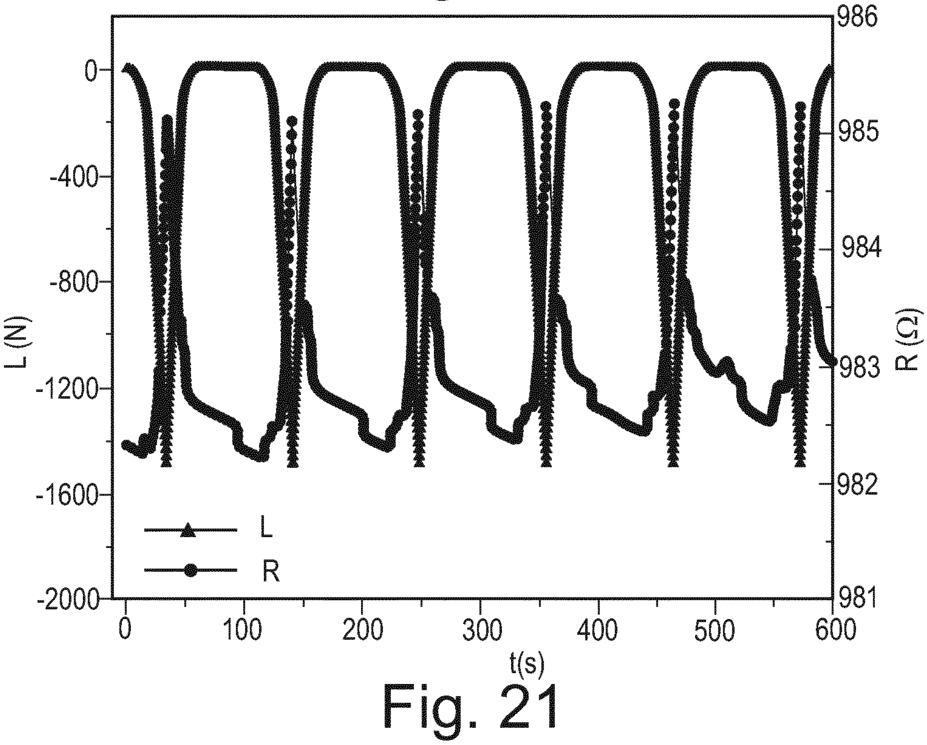
L (N)
R (Ω)
L
R
t(s)

Fig. 21

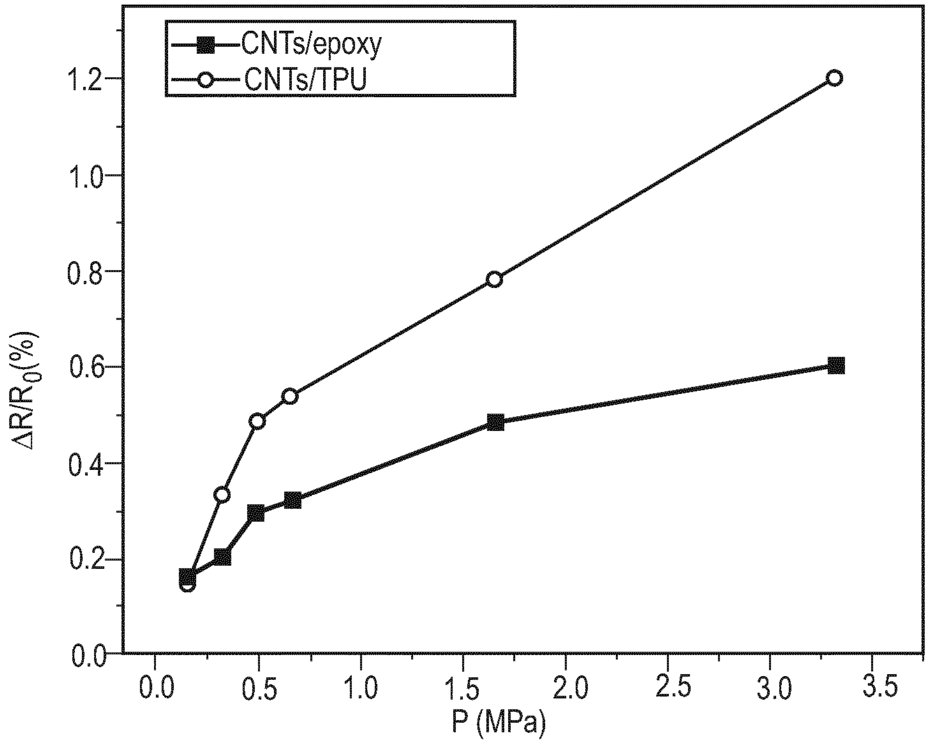
CNTs/epoxy
CNTs/TPU
1.2
1.0
0.8
0.6
0.4
0.2
0.0
ΔR/R0(%)
0.0
0.5
1.0
1.5
2.0
2.5
3.0
3.5
P (MPa)

Fig. 22

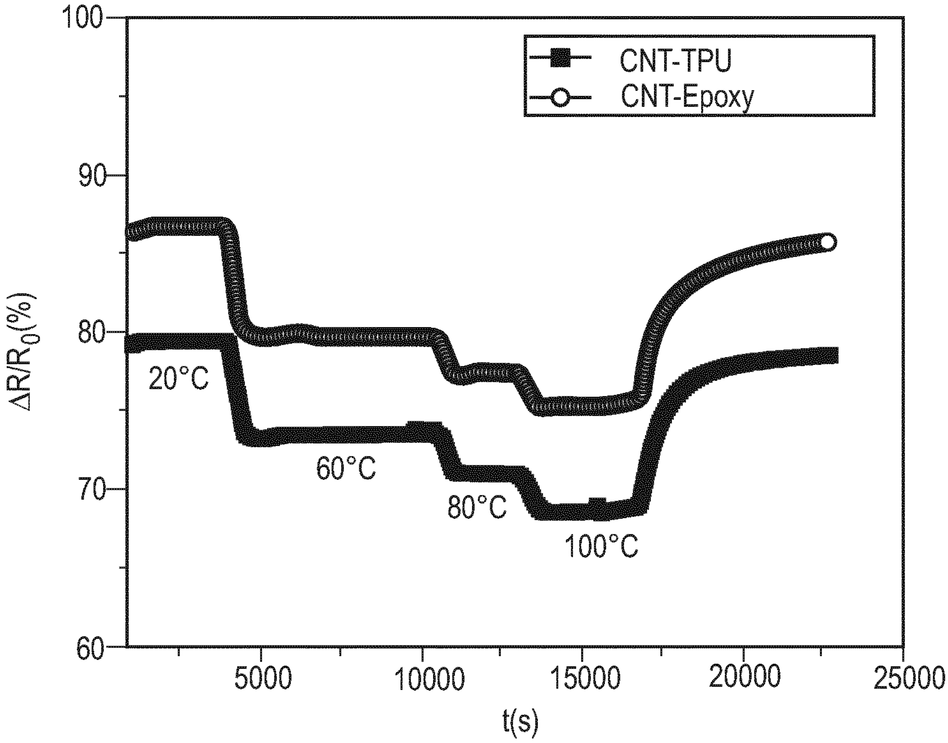
CNT-TPU
CNT-Epoxy
100
90
80
70
60
ΔR/R0(%)
20°C
60°C
80°C
100°C
5000
10000
15000
20000
25000
t(s)

Fig. 23

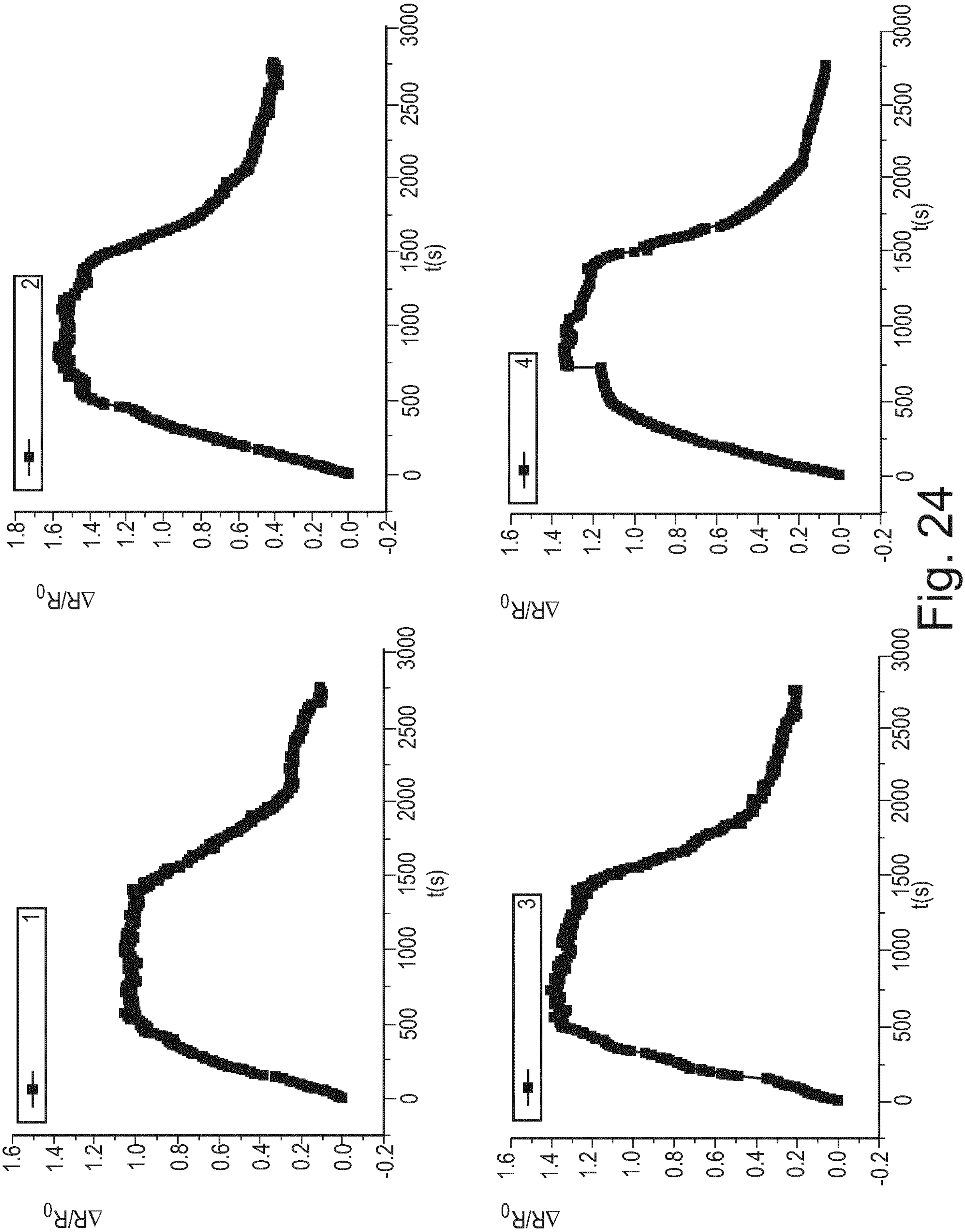


Fig. 24

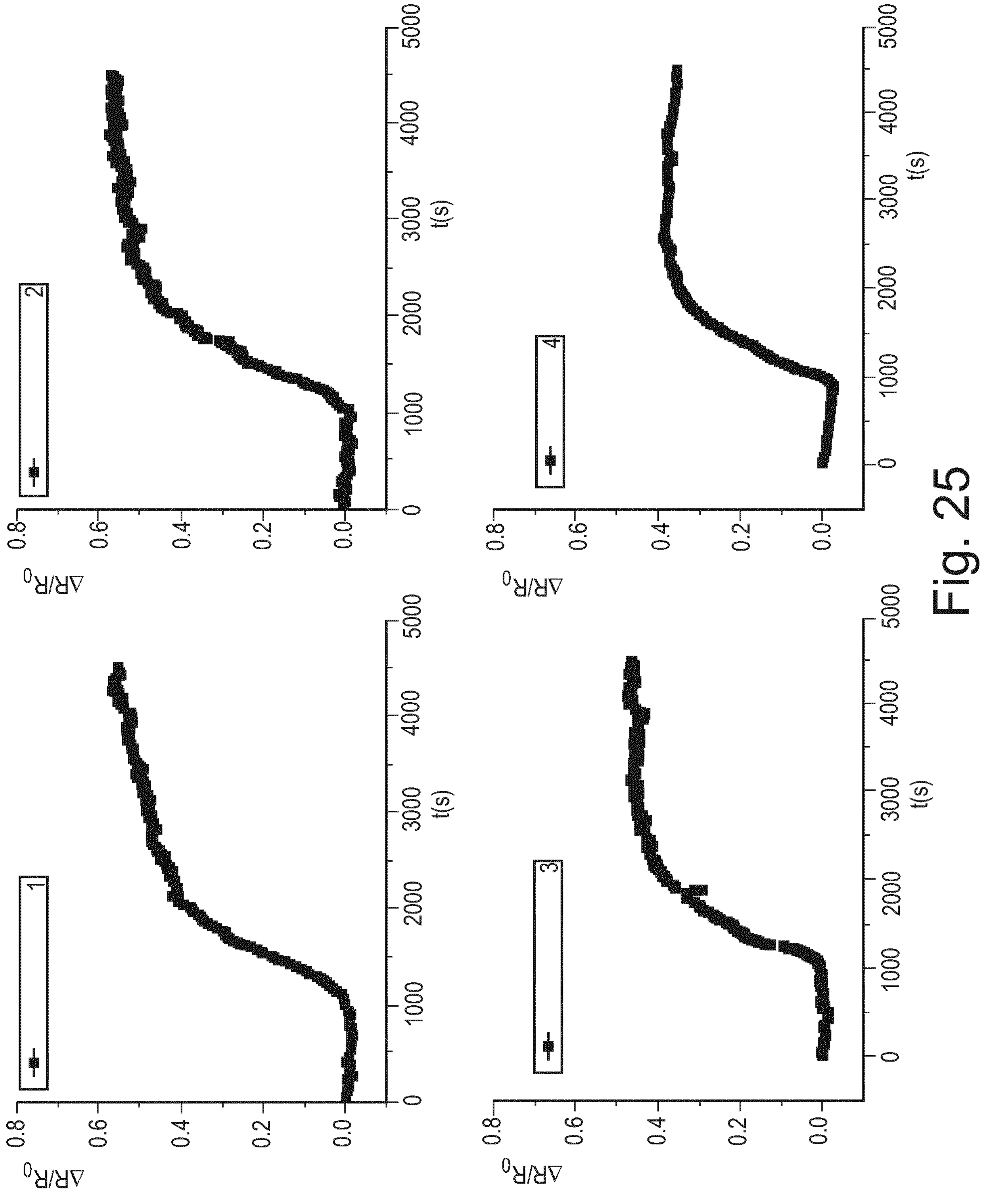


Fig. 25

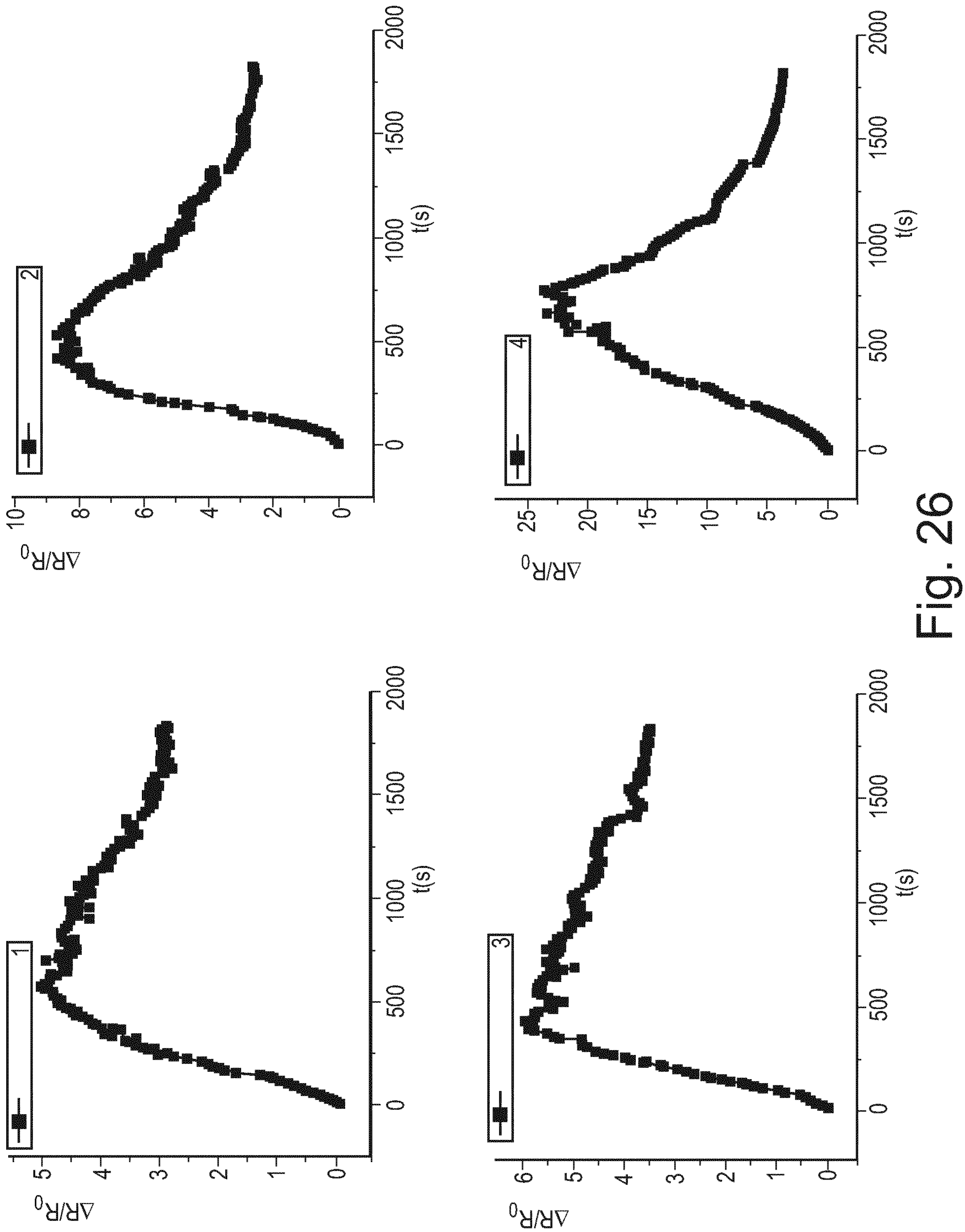


Fig. 26

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 7730547 B


### Littérature non-brevet citée dans la description


- Polymer CNT conductive nanocomposite for sensing. **J. F. FELLER ; M. CASTRO ; B. KUMAR.** Polymer carbon nanotube composites: Préparation, Properties & Applications. Whoodhead Publishing Ltd, 2011, 760-803
- **M. CASTRO ; J. LU ; S. BRUZAUD ; B. KUMAR ; J. F. FELLER.** Carbon nanotubes/poly(e-caprolactone) composite vapour sensors. *Carbon,* 2009, vol. 47, 1930-1942
- **J. F. FELLER ; J. LU ; K. ZHANG ; B. KUMAR ; M. CASTRO ; N. GATT ; H. J. CHOI.** Novel architecture of carbon nanotube decorated poly(methyl methacrylate) microbead vapour sensors assembled by spray layer by layer. *J. Mater. Chem.,* 2011, vol. 21, 4142
- **C. ROBERT ; J. F. FELLER ; M. CASTRO.** Sensing skin for strain monitoring made of PC-CNT conductive polymer nanocomposite sprayed layer by layer. *ACS Applied Materials & Interfaces,* 2012, vol. 4 (7), 3508-3516
- **I. PILLIN ; M. CASTRO ; S. NAG CHOWDHURY ; J. F. FELLER.** Robustness of carbon nanotube sensing interphase to probe composites' interfacial damage in-situ. *Journal of Composite Materials,* 2015